(19) Europäisches Patentamt / European Patent Office / Office européen des brevets

(11) EP 2 908 659 B1

(12) EUROPEAN PATENT SPECIFICATION

(45) Date of publication and mention of the grant of the patent:
20.11.2019 Bulletin 2019/47

(51) Int Cl.:
A23K 40/20 (2016.01)        A23K 50/42 (2016.01)
A23K 20/147 (2016.01)       A23K 40/25 (2016.01)

(21) Application number: 13789416.8

(22) Date of filing: 22.10.2013

(86) International application number:
PCT/US2013/066255

(87) International publication number:
WO 2014/066438 (01.05.2014 Gazette 2014/18)

(54) **AERATED INJECTION MOLDED PET CHEW**

MIT LUFT DURCHSETZTES SPRITZGEGOSSENES KAUPRODUKT FÜR HAUSTIERE

PRODUIT À MÂCHER POUR ANIMAUX DE COMPAGNIE, AÉRÉ ET MOULÉ PAR INJECTION

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR

(30) Priority: 22.10.2012 US 201261716913 P

(43) Date of publication of application:
26.08.2015 Bulletin 2015/35

(60) Divisional application:
19200439.8

(73) Proprietor: Mars, Incorporated
McLean, VA 22101 (US)

(72) Inventors:
• REISER, Ralf Bela
  McLean, Virginia 22101 (US)
• CEPEDA, Chad A.
  McLean, Virginia 22101 (US)
• ELLIOTT, Matthew
  McLean, Virginia 22101 (US)

(74) Representative: Carpmaels & Ransford LLP
One Southampton Row
London WC1B 5HA (GB)

(56) References cited:
GB-A- 1 454 429        US-A- 5 417 992
US-A1- 2004 166 203    US-A1- 2011 014 328

• CHO K Y ET AL: "3D microstructure of supercritical fluid extrudates I: Melt rheology and microstructure formation", FOOD RESEARCH INTERNATIONAL, ELSEVIER APPLIED SCIENCE, BARKING, GB, vol. 42, no. 5-6, 1 June 2009 (2009-06-01) , pages 595-602, XP026090865, ISSN: 0963-9969, DOI: 10.1016/J.FOODRES.2008.12.014 [retrieved on 2008-12-29]
• anon: "Supercritical CO2 Extrusion Opens New Product Opportunities", Food Enginnering , vol. March 2003 2003, XP002718758, Retrieved from the Internet: URL:http://www.foodengineeringmag.com/articles/print/engineering-r-d-supercritical-co-sub-2-sub-extrusion-opens-new-product-opportunities [retrieved on 2014-01-15]
• DATABASE BIOSIS [Online] BIOSCIENCES INFORMATION SERVICE, PHILADELPHIA, PA, US; 1996, SOKHEY A S ET AL: "Application of supercritical fluid extrusion to cereal processing", XP002718759, Database accession no. PREV199698678627 & SOKHEY A S ET AL: "Application of supercritical fluid extrusion to cereal processing", CEREAL FOODS WORLD, vol. 41, no. 1, 1996, pages 29-34, ISSN: 0146-6283

**Description**

**FIELD OF THE INVENTION**

The present invention generally relates to edible pet chews and methods of making and using the same. More particularly, the present invention relates to edible pet chews that have a structure that includes bubbles. More particularly, the present invention relates to a nutritional, edible, pet chew or treat. Still more particularly, the present invention relates to an aerated (or foamed), nutritional, edible pet chew or treat. More particularly, the present invention relates to a treat or chew as described above, wherein the chew or treat facilitates weight loss or weight control properties. In some embodiments, the aeration, or foaming, of the treat is done prior to, during, or after extrusion or injection molding.

The present invention is defined strictly by the claims and relates to an aerated pet chew and methods of making same.

US 2011/014328 A1 discloses a texturized whey protein composition having enhanced functional properties, including, for example, enhanced viscosifying properties, enhanced emulsifying properties and/or enhanced gelling properties. In one embodiment, the texturized whey protein composition is a supercritical fluid extrusion product derived from whey protein. "3D microstructure of supercritical fluid extrudates I: Melt rheology and microstructure formation", Food Research International, vol. 42, no. 5-6, pp. 595-602 discusses the influence of melt rheology and processing conditions on the expansion and 3D microstructure of biopolymeric foams produced by supercritical fluid extrusion (SCFX). In particular, starch-based SCFX extrudates with five whey protein isolate (WPI) concentrations (0-18 wt%) and four $SC-CO_2$ levels (0-0.75 wt%) were produced. Melt rheology was studied with an online slit die rheometer. The 3D microstructure of foams was determined using X-ray microtomography.

US 2004/166203 A1 discloses a nutrition bar which incorporates protein in the form of nuggets having high levels of selected proteins. By use of the nuggets, nutrition bars are formulated to have elevated levels of protein, yet good taste and other organoleptic properties. The nuggets according to the invention include greater than 50 wt % of a non-soy protein selected from the group consisting of milk protein, rice protein and pea protein, especially between 51 wt % and 99 wt %, more preferably between 52 wt % and 95 wt %, most preferably 55 wt % or above. "Engineering R&D: Supercritical CO2 extrusion opens new product opportunities", available at http://www.foodengineeringmag.com/articles/84776-engineering-r-d-supercritical-co-sub-2-sub-extrusion-opens-new-product-opportunities, discusses how supercritical fluid extrusion (SCFX) technology combines two high-pressure processes -- supercritical CO2 processing and extrusion-- to extend the capabilities of conventional extrusion technology.

**SUMMARY OF THE INVENTION**

**The** present invention provides an aerated pet chew composition according to claim 1. The present invention provides an aerated (or foamed as the terms are used interchangeably) pet chew composition comprising 15-90% by weight protein, 5-25% by weight glycerine, 5-25% by weight water, and an amount of supercritical fluid sufficient to occupy 5-55% of the overall volume of the composition when the supercritical fluid is transformed to gas. In some preferred forms, the composition further comprises up to 40% by weight of plasticizer. In other preferred forms, the composition further comprises from 0.05 - 27.55% by weight of an additional ingredient selected from the group consisting of flavor enhancers, fat, vitamins, minerals, colorants, preservatives, and combinations thereof. The gas transformed from the supercritical fluid preferably produces bubbles in the composition. Generally such bubbles have an average diameter between 0.05 to 200 $\mu$m.. Preferably, the bubbles are substantially uniform in distribution throughout the composition. However, in alternative embodiments, the bubbles can be unevenly distributed within the composition. In such cases, the bubbles may be more concentrated in one area than another and the density of the composition will vary. In preferred forms, the distribution of the bubbles will be intentional.

Preferably, the surface roughness of the chew or treat of the present invention is greater than that of a pet chew not having a super critical fluid therein. The Ra ($\mu$m) value for the pet chew of the present invention is preferably from about 4 to 15.

The average coefficient of friction for the pet chew of the present invention is preferably from about 0.136 $\pm$ 0.001 to 0.235 $\pm$ 0.049.

Preferably, the hardness of the treat using the Vickers analysis ranges from about 0.003 to 0.02.

The tensile strength of the product of the present invention that includes a supercritical fluid preferably has about 15% to 50% of the tensile strength of a pet chew that does not include a supercritical fluid. Preferably, the ratio of peak distance to peak force is about 6:1 to 8:1 when comparing a pet chew that includes a supercritical fluid to one that does not include a supercritical fluid.

The present invention also provides novel methods for making compositions in accordance with the invention. Such compositions are preferably injection molded to produce a final pet chew or treat from the composition. In some preferred forms when injection molding is used, the supercritical fluid contacts the composition during the injection molding process. In some preferred injection molding processes, the composition is extruded prior to the injection molding process. In some forms, the supercritical fluid is added to the composition during the extrusion process and prior to the injection molding process. When the composition is extruded to produce the final pet chew product, the supercritical fluid contacts the composition during the extrusion process.

## BRIEF DESCRIPTION OF THE DRAWINGS

FIGURE. 1 is a diagram of an exemplary method of producing a pet chew according to the disclosure;

Fig. 2 is another diagram of an exemplary method of producing the pet chew product according to the disclosure;

Fig. 3 is another diagram of an exemplary method of producing the pet chew product according to the disclosure;

Fig. 4 is a schematic drawing of the injection molding process that may be used to make the pet chew product according to the invention;

Fig. 5 is an illustration of a particularly preferred pet chew of the present invention;

Fig. 6 is a graph showing cell size distribution for a 1 cubic centimeter sample size of the pet chew product according to the present invention;

Fig. 7 is a graph showing the average force/distance curve for the control and one embodiment of the treats of the present invention;

Fig. 8 is a graph showing the results of tensile strength for the control and one embodiment of the treats of the present invention.

Fig.9 is a diagram of an exemplary method of producing a pet chew according to the invention with addition of supercritical fluid;

Fig. 10 is another diagram of an exemplary method of producing the pet chew product according to the invention with addition of supercritical fluid;

Fig. 11 is another diagram of an exemplary method of producing the pet chew product according to the invention with addition of supercritical fluid;

Fig. 12 is a schematic drawing of the injection molding process that may be used to make the pet chew product according to the invention with addition of supercritical fluid; and

Fig.13 is a diagram of an exemplary method of producing a pet chew according to the invention with addition of supercritical fluid;

## DETAILED DESCRIPTION

The embodiments of the invention described herein are illustrative of the present invention and are not meant to be limiting.

In general, the present invention is directed to an edible pet treat or chew and methods for manufacturing a nutritious product that is designed to remove plaque and tartar through mechanical abrasion while providing safe occupation and enjoyment. The pet chew of the invention provides rapid breakdown of the product once ingested by the animal and demonstrates significant reduction in plaque and tartar as compared to a standard test diet. The composition of the pet chew creates a nutritious and functional treat, which will promote a healthy lifestyle for the animal.

The edible pet chew composition of the invention is generally formed from a thermoplastic material comprising a protein, glycerin and water, preferably further comprising a water absorbing polymer and a plasticizer. It is also disclosed that the edible pet chew composition may be formed from a thermoplastic material further comprising a water absorbing polymer and a plasticizer. The pet chew of the invention is preferably a mono-component/mono-texture product. As used herein, mono-component/mono-texture product means that the chew product is a substantially homogeneous molded mass that be formed into any shape desired for a pet chew or treat.

The pet chew exhibits ductile properties so that when chewed, the animal's teeth sink into the product causing the product to break down in a controlled manner under repetitive stress. The edible thermoplastic material can be molded into a variety of shapes to provide good strength and stiffness and other desired physical properties to enhance functionality and chewing enjoyment.

The softer, chewier texture of the present pet chew improves animal enjoyment and demonstrates enhanced oral care efficacy. The pet chew composition of the invention provides a balanced blend of highly digestible proteins in a matrix of water-soluble materials to improve nutritional performance and animal safety.

Protein may be comprised of any protein such as, fibrous protein and or gelling protein. The fibrous protein for the pet chew may be derived from animals, but can be formulated such that it does not include muscle protein, or plants. One skilled in the art would recognize that insubstantial amounts of muscle protein could be present. Fibrous proteins are generally strong and relatively insoluble. Due to such properties, fibrous proteins are important in providing the structural backbone of the pet chew product. Exemplary fibrous proteins include, but are not limited to, wheat protein, wheat gluten, corn zein, corn gluten, soy protein, peanut protein, casein, keratin and mixtures thereof. Particularly preferred fibrous proteins include, without limitation, wheat protein isolate, soy protein isolate, sodium caseinate and mixtures thereof. A highly preferred fibrous protein is a mixture of wheat protein isolate, soy protein isolate and sodium caseinate.

The water absorbing polymer in the pet chew may be a gelling protein, a hydrocolloid, an edible hydrogel, or mixtures thereof. Gelling protein, sometimes known as globular protein, generally comprises globelike proteins that are relatively soluble in aqueous solutions where they form colloidal solutions or gels. Exemplary gelling proteins include, but are not limited to gelatin, albumin, plasma, pea protein, lactoglobulins, surimi (fish) proteins, whey protein and mixtures thereof. A highly preferred gelling protein is gelatin.

A hydrocolloid may be used in the pet chew composition as the water absorbing polymer. A hydrocolloid is generally defined as a macromolecule (e.g., a carbohydrate polymer or a protein) that is water soluble and forms a gel when combined with water. Exemplary hydrocolloids include, but are not limited to pectins, alginates, agars, carrageenan, xanthan gum, and guar gum.

An edible hydrogel may be used in the pet chew as the water absorbing polymer. The edible hydrogel may be a naturally occurring or synthetic material which swells in water or some liquid, retaining a large amount of the liquid without dissolving. Exemplary hydrogels include, but are not limited to maltodextrins, cetyl alcohol, chitosan, lecithins, polypeptides, waxes, and edible polymers.

In a preferred embodiment, the water absorbing polymer is a gelling protein. In a more preferred embodiment, the gelling protein is gelatin, preferably having a bloom strength in a range of about 100 to about 400. Most preferably, the gelatin will have a bloom strength in a range of about 100 to about 200.

Plasticizers dissolve in the polymer, separating polymer chains and thus facilitating molecular movement. Plasticizers are commonly used to increase workability, flexibility and extensibility of polymers. Plasticizers also reduce water activity of food systems by binding water that is otherwise available for biological reactions such as microbial growth. Exemplary plasticizers generally used in food applications include, but not limited to water, polyalcohols (e.g. sorbitol, mannitol, maltitol, glycerol and polyethylene glycol), gum arabic, hydrogenated starch hydrolysate and protein hydrolysate. In a preferred embodiment, the plasticizer is glycerol. In yet another preferred embodiment, the plasticizer is hydrogenated starch hydrolysate.

Yet another embodiment of the invention is directed to a pet chew composition that is a mixture comprising fibrous protein in an amount of about 15 to about 90%, preferably about 20 to about 80%, still more preferably between about 25% to about 60%, even more preferably about 30 to about 50% by weight of the composition, water absorbing polymer in an amount of about 5 to about 35%, preferably about 10 to about 30%, more preferably about 15 to about 25% by weight of the composition, plasticizer in an amount of about up to 40%, preferably about 5 to about 40%, preferably about 10 to about 35%, more preferably about 15 to about 30% by weight of the composition, and water in an amount of 5 to 25% by weight of the composition. In a preferred embodiment the pet chew composition will contain starch in an amount less than about 5%, preferably less than about 4% and more preferably less than about 3% by weight of the composition. This composition is thermoplasticized, preferably by extrusion, and molded to form the pet chew product. The pet chew product is formed by injection molding. One skilled in the art will readily recognize that the pet chew of this disclosure could also be prepared by compression molding, extrusion without molding or tableting techniques.

The properties of the proteinaceous materials used in the pet chew are subject to chemical and physical interactions (e.g., protein/protein and with other materials including water absorbing polymers) to improve their solubility and textural properties to enhance oral care benefits and animal safety. Animal safety is achieved through product design to minimize risk in all areas. Control of texture minimizes risks of dental fractures; controlled product size reduction through chewing reduces risk of choking; and superior solubility/digestibility eliminates risk of intestinal blockage.

The pet chew composition may also contain at least one additional ingredient selected from the group consisting of fat, flavor enhancers, preservatives, nutrients, and/or colorants. As used herein, fat includes edible oils and preferably will be liquid fat at room temperature. Exemplary fats include corn oil, soybean oil, peanut oil, cottonseed oil, grapeseed oil, sunflower oil, flaxseed oil (and other sources of omega-3 and omega-6 fatty acids), vegetable oil, palm kernel oil, olive oil, tallow, lard, shortening, butter and combinations thereof. In a preferred embodiment, the fat is vegetable oil. If the fat is present, it will generally be in a range of about 1 to about 20%, preferably about 1.5 to about 10% and more preferably about 2 to about 5% by weight of the pet chew composition. Flavor enhancers are well known and the use of any and all such flavor enhancers is encompassed within the present invention. Other ingredients may also be included in the composition, for example, release agents, stabilizers, and emulsifiers.

The pet chew of the present invention contains an amount of supercritical fluid to occupy 5-55% of the overall volume of the composition after the supercritical fluid is transformed to gas within the matrix of the chew. A variety of amounts of supercritical fluid is envisioned, depending on the desired density of the resulting chew of the present invention. Preferably, the overall volume of the pet chew of the present invention occupied by the supercritical fluid can be, but is not limited to, any of the following amounts: 5-50% of the overall volume, 10-50% of the overall volume, 15-40% of the overall volume, 20-35% of the overall volume, 5-10% of the overall volume, 10-15% of the overall volume, 15-20% of the overall volume, 20-25% of the overall volume, 25-30% of the overall volume, 30-35% of the overall volume, 35-40% of the overall volume, 40-45% of the overall volume, 45-50% of the overall volume, and 50-55% of the overall volume after the supercritical fluid is transformed to gas within the matrix of the chew.

In one embodiment, the pet chew composition may contain an amount of supercritical fluid that is 0.05-0.25%, by weight, whereas this amount may have an amount of supercritical fluid sufficient to occupy 5-55% of the overall volume of the composition when the supercritical fluid is transformed to gas. Various amounts of supercritical fluid are envisioned, including but not limited to from about 0.05% to 0.1% by weight; 0.05% to 0.15% by weight; 0.1 to about 0.15%, by weight and any amounts therebetween as well as within the larger range provided above. The amount of supercritical fluid in some applications may be sufficient to occupy a volume of about 25%; 0.10% by weight, whereas this amount may be sufficient to occupy a volume of about 15%; and about 0.05%, a volume of 5%, or any range therebetween as well as within the larger range provided above. In this embodiment, the supercritical fluid is preferably nitrogen. In an alternate embodiment where $CO_2$ is utilized as a supercritical fluid other than nitrogen, the amount of supercritical fluid maybe altered in order to occupy a certain desired volume of the product of the present invention.

In an embodiment, the thermoplastic composition may also contain active ingredients for removal of plaque and tartar, and materials for breath freshening and general oral health.

The pet chew of the present invention demonstrates high flexibility and elastic properties to improve chewing enjoyment and lasting time. The product is designed to break down in a controlled fashion under repetitive chewing. The texture of the pet chew ensures proper balance between animal safety, oral care efficacy, enjoyment and lasting time. Further, the breakdown or fracture of the pet chew of the invention under mechanical stress is controlled to avoid release of large pieces that can be swallowed intact and increase risk of choking and digestive obstruction.

In an embodiment of the invention, the surface roughness of the pet chew of the present invention is higher when compared to a pet chew that does not include a supercritical fluid therein. Surface roughness refers to the surface texture of the interior cross-section area, where this area makes surface contact with a tooth during the downward bite and upward pull involved with a chewing action. In an embodiment of the present invention, a pet chew of the present invention having a supercritical fluid demonstrates similar flexibility, hardness and elastic properties when compared to a pet chew that does not include a supercritical fluid therein. Preferably, the recipe or formulation of the pet chew of the present invention may be altered such that hardness, elasticity, and flexibility may be altered. In another embodiment, the pet chew of the present invention has softer textural properties when compared to a pet chew that does not include a supercritical fluid therein.

**Example 1 Formulation of a pet chew composition of the invention:**

TABLE 1

| Ingredient | Liquid or Powder | Weight Percent |
|---|---|---|
| Fibrous Protein | Powder | 30-50 |
| Gelling Protein 100-200 Bloom | Powder | 15-25 |
| Glycerine | Liquid | 15-25 |
| Water | Liquid | 5-15 |
| Hydrogenated Starch Hydrolysate | Liquid | 0-15 |

(continued)

| Ingredient | Liquid or Powder | Weight Percent |
|---|---|---|
| Flavor Enhancer | Powder | 1-10 |
| Fat | Liquid | 1-10 |
| Nutrients | Powder | 3-7 |
| Preservative | Powder | 0.05-0.55 |
| Colorant | Powder | 0.005-0.045 |

The water activity of the final products ranges from 0.2-0.85. In addition, individual ingredient levels and ratios of liquid to powder may be modified to obtain various final product textures. Further, replacing ingredients with alternatives may also result in different final product textures. For example, the use of 200-bloom gelatin instead of 100-bloom gelatin would result in a firmer product.

**Example 2 Formulation of a pet chew composition:**

TABLE 2

| Ingredients | Weight Percent |
|---|---|
| Wheat Protein Isolate | 17 |
| Soy Protein Isolate | 14 |
| Sodium Caseinate | 8 |
| Glycerin | 17 |
| Hydrogenated Starch Hydrolysate | 9 |
| Gelatin (100 Bloom) | 17 |
| Water | 7 |
| Vegetable Oil | 3 |
| Flavor/Nutrients/Preservatives/Colorant | 8 |

**Example 3 Formulation of yet another pet chew composition:**

TABLE 3

| Ingredients | Weight Percent |
|---|---|
| Wheat Protein Isolate | 18 |
| Soy Protein Isolate | 15 |
| Sodium Caseinate | 8.5 |
| Glycerin | 17.5 |
| Hydrogenated Starch Hydrolysate | 2.8 |
| Gelatin (100 Bloom) | 18.5 |
| Water | 9.2 |
| Corn Oil | 1.5 |
| Flavor/Nutrients/Preservatives/Colorant | 9 |

**Example 4 Formulation of another pet chew composition:**

TABLE 4

| Ingredients | Weight Percent |
|---|---|
| Wheat Protein Isolate | 18.8 |
| Soy Protein Isolate | 15.6 |
| Sodium Caseinate | 8.9 |
| Glycerin | 15.8 |
| Hydrogenated Starch Hydrolysate | 2.5 |
| Gelatin (100 Bloom) | 19.3 |
| Water | 8.3 |
| Vegetable Oil | 1.4 |
| Flavor/Nutrients/Preservatives/Colorant | 9.4 |

**Example 5 Formulation of another preferred pet chew composition:**

Product performance of the pet chew is measured against a number of criteria including plaque and tartar reduction, breath freshening, lasting time, palatability as measured by paired preference, solubility, textural attributes including hardness, density, elasticity, friability, water absorption capacity, and speed of solubilization.

Texture measurements were performed with a TA.HDi Texture Analyzer (Texture Technologies Corp., Scarsdale, N.Y.) equipped with a 250-500 kg load cells. A 5 mm diameter cylindrical probe was used for uniaxial compression or puncture tests, and the tests were conducted at a room temperature of 25°C. Data was collected using the Texture Expert software (version 2.12) from Texture Technologies Corp. Two different uniaxial compression or puncture tests were run. These tests were selected because they best resemble the biting and chewing of the test samples by dogs.

The compression analysis parameters are as follows. Work (W) is defined as an estimate of work; and therefore shows the toughness of the product. A tough product will have a higher work value than a less tough product. The area shows the "force" or load that must be applied to the product to cause it to break. The area under the curve represents toughness. The expressed "Area" units come from the multiplication of y-axis per x-axis as N*mm. To convert "Area" to Work-W-(F/d) multiply by 0.1020408 m.sup.2/mm/s.sup.2.

The Max Force (N) is defined as the maximum amount of force needed to overcome the product's hardness. Usually a hard product will be associated with high ordinate (y-axis) values. The expressed "Force" unit derives from a direct association with mass weight in kg. To convert "Force" to "Max Force"-N-multiply by 9.81 m/s.sup.2 (the acceleration of gravity).

Travel (mm) is represented as the point (distance) at which the peak force is reached. Thus it emulates the resistance of the product as a combination between toughness and hardness, in addition to elasticity, attributed to a measurement of how far the probe has traveled to reach the maximum force. Larger travel numbers are indicative of more elastic products. Resistance to breaking is directly proportional to travel values.

Linear Distance (mm) is calculated by measuring the length of an imaginary line pulled taunt joining all the trajectory points. This measure describes crumbly verses cohesive product attributes. It is a direct assessment of brittleness where a brittle product will produce more sharp peaks, resulting in a higher linear distance.

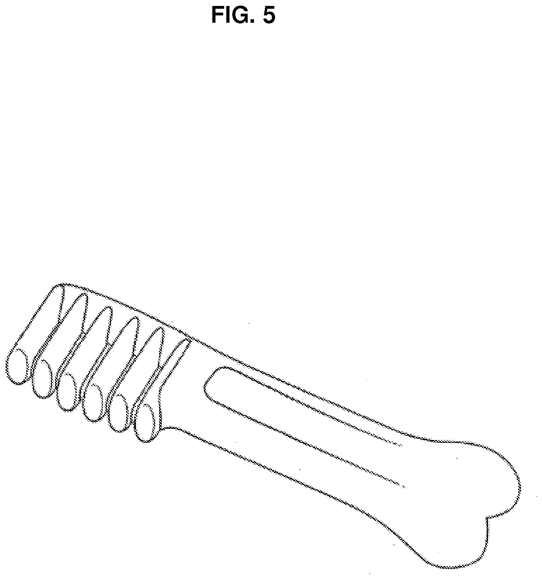

The values of hardness, toughness, elasticity, toughness were determined using whole product samples. A base platform, as observed with the TA.HDi, provided by Texture Technologies, was used to measure force/distance. An exemplary product sample that was made and tested is shown in FIG. 5.

The sample was centered on the platform such that the knife will contact one location along the sample bone length at a time. The chosen locations included the brush head. The location is contacted with the knife at a 90° angle while the sample is laying on its side placed on a flat platform surface. The brush head, the joint of the shaft to the brush head and the knuckle at the end of the shaft of a pet chew are clearly visible in FIG. 5.

Solubility

The in vitro measurement of solubility/digestibility of a pet chew may be used to indicate the amount of the pet chew that would solubilize or be digested in the gastrointestinal tract of a pet, and particularly a dog. The test performed is based on a portion or whole piece of a pet chew product. A particular size portion or piece, e.g., a 32-gram pet chew portion, may be used so that different formulations can be accurately compared. The outcome is expressed as percent (%) in vitro disappearance (IVD). The solubility measurement is performed by subjecting a specific amount of product to a number of solutions which represent the stomach and intestinal environments of a pet. Generally, the stomach environment is relatively acidic and the intestinal environment is relatively more alkaline compared to the stomach. After subjecting the product to these environments, any product left is filtered and dried. This leftover product is weighed and compared with the weight of the initial product. Percent IVD is the percentage of the weight of the dissolved product in comparison to the weight of the initial product. The solubility test is further described below.

Solutions Utilized:

Phosphate Buffer, 0.1M, pH 6.0 Solution: 2.1 grams of sodium phosphate dibasic, anhydrous, and 11.76 grams of sodium phosphate monobasic, monohydrate were dissolved in a 1 liter volumetric flask and brought up to volume with distilled/deionized (dd) water.

HCl Solution: 17.0 ml concentrated HCl was added to a 1 liter volumetric flask containing 500 ml dd water and brought up to volume with dd water. When 100 ml of HCl:pepsin is added to 250 ml of phosphate buffer, the pH should be close to 2.0. One way to achieve this is to use 850 ml of 0.1 N HCl+150 ml of 1 N HCl to make 1000 ml of HCl stock solution. When 100 ml of HCl:pepsin is added to 250 ml phosphate buffer, the pH of the solution is about 1.9-2.0.

HCl:Pepsin Solution: The appropriate amount of pepsin (Sigma P-7000, pepsin amount is dependent on sample size being tested. 0.01 gram pepsin per 1 gram sample must be obtained in the final mixture at Step 6 of the procedure. For example 0.3 gram pepsin would be used for 30 grams sample) was placed in a 1 liter volumetric flask and brought up to volume with the HCl solution made above.

Chloramphenicol Solution: 0.5 gram chloramphenicol (Sigma C-0378) was brought up to volume in a 100 ml volumetric flask with 95% ethanol.

Sodium Hydroxide Solution, 0.5N: 20 grams NaOH was brought up to volume in a 1 liter volumetric flask with dd water.

Phosphate Buffer, 0.2M, pH 6.8 Solution: 16.5 grams of sodium phosphate dibasic, anhydrous, and 11.56 grams of sodium phosphate monobasic, monohydrate were dissolved in a 1 liter volumetric flask and brought to volume with distilled water.

Pancreatin:Phosphate Buffer Solution: The appropriate amount of porcine pancreatin (Sigma P-1750, enzyme amount is dependent on sample size being tested. 0.05 gram porcine pancreatin per 1 gram sample must be obtained in the final mixture of Step 8. For example, 1.5 grams of pancreatin would be used for 30 grams samples) was dissolved in a 500 ml volumetric flask and brought up to volume with 0.2M, pH 6.8 phosphate buffer solution made above.

Procedure Example

1. Place numbered pieces of dacron fabric in a 57°C oven overnight and weigh the next day.
2. Weigh samples into Erlenmeyer flasks. (Weigh additional sample to dry as a control along with residue to account for moisture loss during % IVD calculation). Add 250 ml 0.1M pH6.8 Phosphate Buffer Solution to each flask.
3. Add 100 ml HCl:Pepsin Solution to each flask. Check that the pH of the mixture is about 2. Adjust with HCl if needed.
4. Add 5 ml Chloramphenicol Solution to each flask.
5. Stopper the flasks. Mix gently. Incubate at 39°C for 6 hours. Mix on a regular basis using a shaking water bath, set at a speed that causes the samples to constantly move in the flask while keeping the products submerged in the solution.
6. After incubation, add enough 0.5N Sodium Hydroxide Solution to each flask to reach a final pH of 6.8 for the mixture.
7. Add 100 ml Pancreatin: Phosphate Buffer Solution to each flask. Mix gently.
8. Stopper the flasks. Incubate at 39°C for 18 hours. Mix on a regular basis using a shaking water bath, set at a speed that causes the samples to constantly move in the flask while keeping the products submerged in the solution.
9. Filter the sample through tared pieces of dacron fabric from Step 1. Rinse with three times with dd water. Maintain at 57°C until constant weight is reached.
10. Record pH at the following stages:

    a. At step 4.
    b. After 6 hours of digestion.
    c. After addition of NaOH solution at step 7.

d. After addition of pancreatin:phosphate buffer solution.

e. After 24 hours.

Calculations:

$$\text{Residue Weight} = (\text{ Filter + Sample weight after incubation }) - \text{Dry filter weight}$$

$$\% \text{ IVD} = 1 - \frac{(\text{Sample residue weight}) - (\text{Blank residue weight})}{\text{Dry matter weight}} \times 100$$

In certain embodiments, the pet chew composition possesses a solubility of at least 60% IVD, preferably at least 70% IVD and more preferably at least 75% IVD based on a maximum 32-gram piece (if the pet chew is less than 32 grams then typically a single chew product of a given gram weight will be used. It is not recommended to use a piece larger than 32 gram for a realistic reading. Of course one of ordinary skill will recognize that the mass of the pieces analyzed need to be substantially equivalent to make a comparison of the solubility numbers). While the solubility of the pet chew of this invention may be close to 100%, it generally will be in the range of about 60 to about 95% IVD. The solubility of a pet chew made from the formulation of Example 2 by extrusion and injection molding as described herein was about 85% IVD.

In a preferred embodiment, where the process material was exposed to supercritical fluid, the IVD of the resulting pet chew has an increased IVD in the range of about 5 to about 10% when compared to a pet chew that does not include a supercritical fluid therein. The increased IVD of the pet chew of the present invention could also have an IVD range that is 5-25% higher, including ranges such as, but not limited to, 5-15%, 5-20%, 5-25%, 10-25%, 15-25%, and 20-25%. Generally, as the IVD of the pet chew of the present invention increases as the amount of supercritical fluid increases.

Extrusion

In a preferred embodiment, extrusion may be used to manufacture the products according to the present invention, preferably twin-screw extrusion for production of pellets. The pellets are subsequently melted and formed into particular shapes by post-extrusion forming by injection molding. Subsequent to injection molding, individual pieces of the products are trimmed for flash removal followed by cooling prior to packaging.

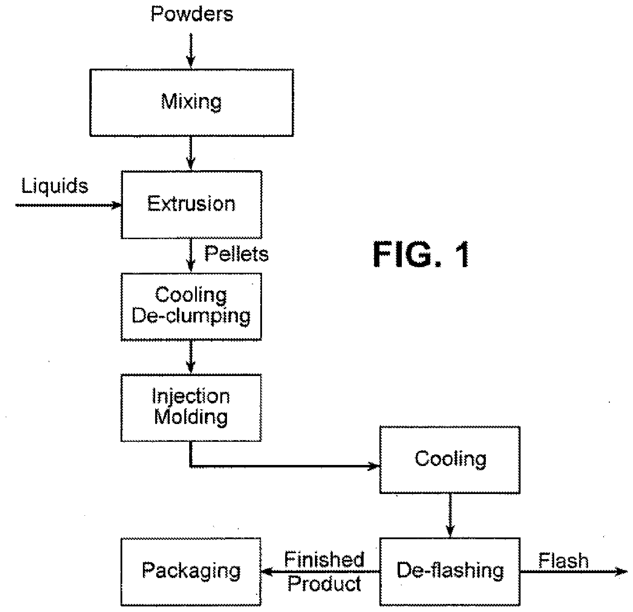

FIG. 1 shows a diagram of an exemplary method of producing the pet chew product according to the disclosure. As shown in FIG. 1, the manufacturing process from mixing of ingredients to finished product packaging occurs on a continuous basis. Powder ingredients are mixed in the mixer for about 5-30 minutes. Uniform mixture of powder ingredients is subsequently fed into an extruder, preferably a twin-screw extruder. Downstream from the powder inlet, liquid ingredients are added to transform the mixture of powder and liquid ingredients into a uniformly plasticized, moldable mass in the presence of heat and shear. During this process, the moldable mass is also cooked by the increased temperature in the extruder barrels. The temperature profile of the extruder barrels are determined by, among others, the composition, pressure, residence time in the extruder barrels, screw profile, screw speed and shear rate.

The temperature and shear in the extruder zones will be set to provide sufficient thermoplastification. This may be achieved with temperatures in a range of about 88°C to about 141°C in the middle zones and lower temperatures at either end of the barrel. Of course, greater temperatures may be employed in the middle zones.

Thus the temperature can be controlled across the barrel to enable optional venting of energy and moisture along the extruder. Forced venting may also be achieved by using vent/vacuum stuffers at the end of process section where most cooking is achieved on the moldable mass inside the extruder barrel.

At the extruder exit, extrudate is forced through a die with small orifices. Immediately behind the die, the extrudate is exposed to increasing pressure and temperature due to the restriction imposed by the small die openings thus use of extra cooling becomes increasingly important to ensure pellet quality.

Subsequent to exiting the extruder die, the plasticized extrudate is cut at the die surface by a surface cutter equipped with at least one blade in to small pellets. Rotational speed of the cutter may be adjusted depending on the size requirements of the pellets in addition to flow properties of the extrudate. Product temperature at the die exit may range from about 82°C to about 95°C, and is most preferably about 85°C

After cutting, pellets are placed on moving conveyors to carry the pellets away from the extruder exit. This process also facilitates cooling of the pellets to prevent caking which reduces the need for a subsequent de-clumping step in the process sequence. Conveyors may be kept at ambient temperatures, however, in order to reduce cooling time, forced air circulation with chiller air may be applied to induce rapid cooling.

Depending on the formulation, speed and extent of cooling, pellets may stick together forming clumps of variable sizes. These clumps must be reduced in size, achieved by de-clumping, to ensure a steady and stable injection molding process.

Subsequent to cooling and de-clumping, pellets are conveyed to injection molding, where the final product shape is achieved.

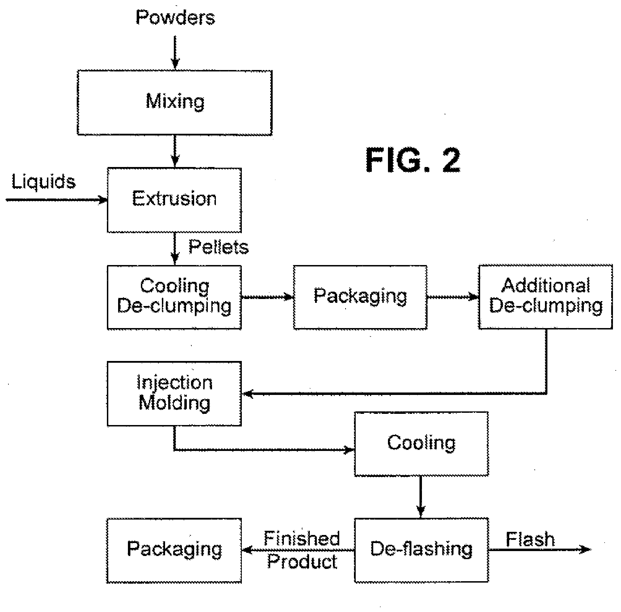

An alternative manufacturing process can be seen in FIG. 2. FIG. 2 shows a diagram of another exemplary method of producing the pet chew product according to the invention, in which pellets are manufactured well prior to being used in injection molding.

While the mixing, extrusion, cooling and de-clumping steps may be similar to that described above (see FIG. 1), in the alternative manufacturing process illustrated in FIG. 2, pellets are packed into suitable containers upon cooling or de-clumping. For packaging, totes, sacks, super-sacks, barrels, cartons, etc. may be used for storage and transfer. The selection of packaging depends on, among others, packing characteristics of pellets, environmental and safety regulations, handling/transportation requirements, usage frequencies and sizes.

Pellet containers must be appropriate for target use and inert enough to protect their contents from external elements such as insects, birds, dust, temperature and humidity fluctuations, sun exposure, aroma and flavor transfer/leach from the containers.

Prior to injection molding, an additional de-clumping process may be required to break up clumps into individual pellets again if packing or clumping of pellets is observed in the containers during storage or transport. Upon de-clumping, pellets are molded into final product shape by injection molding as described below.

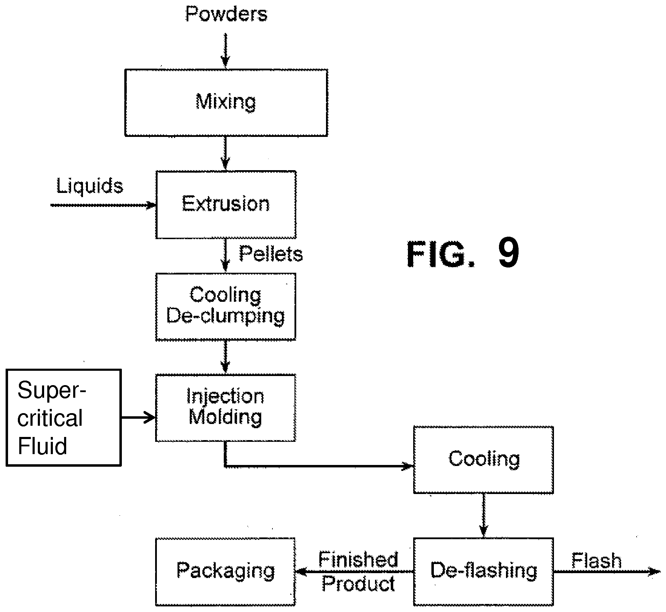

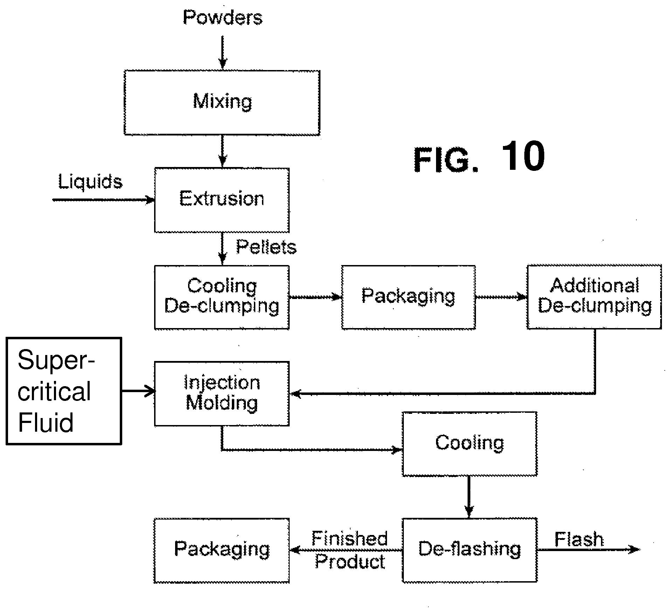

In processes of the invention shown in Figs. 9 and 10, a supercritical fluid is added to the extruded product either before or during the injection molding process. A more detailed explanation of the various methods that can be used with this variation is provided below. As can be appreciated, the use of a supercritical fluid and control of the temperature and pressure parameters will form the advantageous bubbles or foam in the final product.

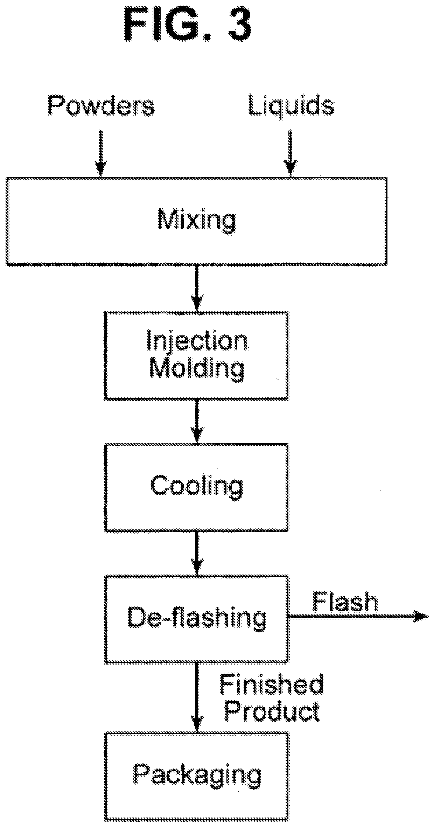

FIG. 3 shows yet another diagram of an exemplary method of producing the pet chew product according to the disclosure. The process, shown in FIG. 3, combines powder and liquid ingredients together in a high shear mixer to form a uniform mass. According to the process shown in FIG. 3, the pellet production step is also eliminated by feeding the uniform mass directly into the injection molder's barrel.

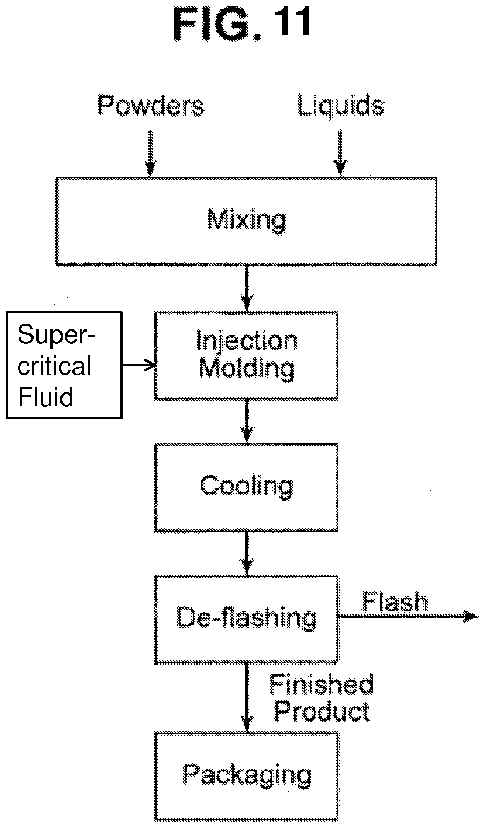

In a process of the invention shown in Fig. 11, a supercritical fluid is added to the mixed product prior to or during the injection molding process. As noted below, the size and density of the bubbles will preferably be controlled such that the desired concentration and size of bubbles is produced in the final finished product.

Subsequent to injection molding, the product is cooled and subjected to a de-flashing process where excess material on the product is removed. De-flashing may be achieved by vibration of product inside vibrating hoppers, vibrating tables and/or tumblers.

Injection Molding

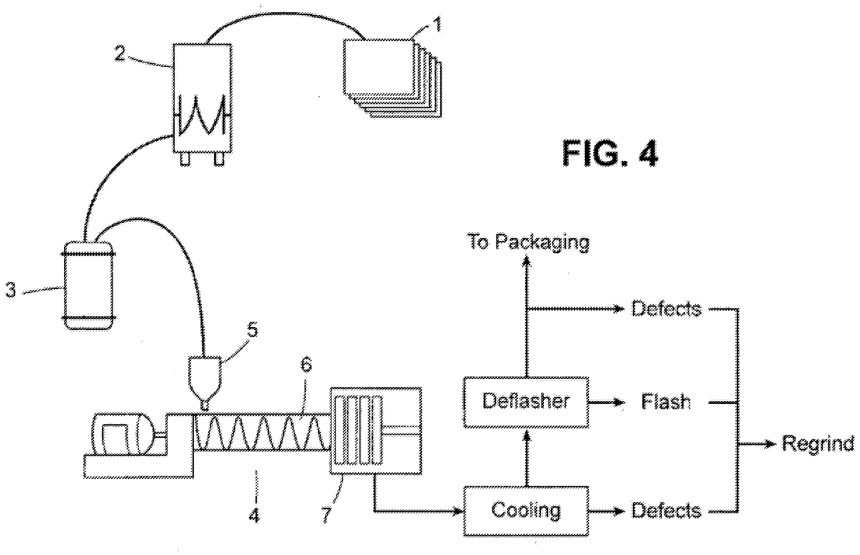

FIG. 4 shows a schematic drawing of the injection molding process that is used to prepare the pet chew product according to the invention. Material for the injection molding process may be delivered in containers 1 in the form of pellets. Occasionally, due to transport, load pressure and the nature of the recipe, the pellets have a tendency to pack together and form large adhesive blocks. Thus, if necessary, each container is transferred to a de-clumper 2 to break up and separate the individual pellets to allow feeding into the injection molders 4. The individual pellets are collected in a container 3 and then vacuum fed to a feeder 5 leading to the injection molders for forming.

As the pellets are conveyed across the injection molder screw 6, the high temperatures, shear and pressure generated by the screw transforms the solid pellets into a melted product that can be injected into the mold 7 and take form. The melted product travels through the sprue and/or manifolds, runners and/or nozzles and then the cavities to form the final product shape. Once the shot is complete, the injection screw will retract and refill with melted product for the next shot.

As the injection molder is being filled, the formed products in the cavities are either cooled or heated as required to cool and/or set the products. Once the desired cooling or set time is achieved, the mold opens and the products are released from the cavities through ejector pins on the backside of the product. The molded products fall on to a mechanical conveyor, which are subsequently collected for cooling. If runners are present, they are removed and the molded products are laid out on a cooling table to allow the temperature of the bones to reach ambient temperature prior to packaging. An exemplary molded pet chew is shown in FIG. 5.

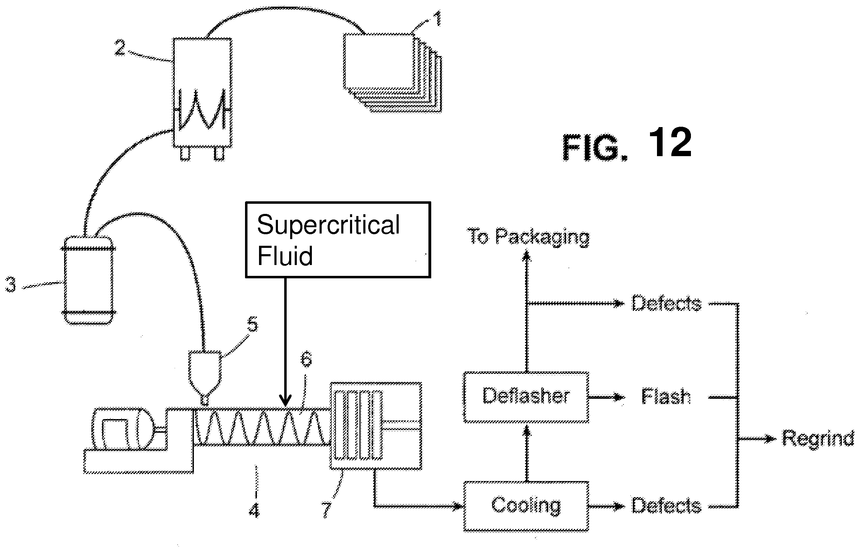

As explained in more detail below, in the process of the invention shown in FIG. 12, a supercritical fluid can be added to the process at several points. First, some variations will add the supercritical fluid into the extruder barrel during the extrusion process. Of course, care will be taken to ensure that the pressure and temperature parameters are controlled such that the supercritical nature of the fluid is maintained as desired. Other variations will add the supercritical fluid to the mixed material passing from the extruder into the injection molding apparatus. Other variations will add the supercritical fluid to the material in the injection molder. As can be appreciated, cell nucleation and expansion resulting from manipulation of the temperature and pressure can be effected at any desired location or any desired time point to produce foamed products.

Exemplary injection molding process parameters for the formation of the molded products are shown in Table 5.

Table 5

| Exemplary injection molding process parameters | | |
|---|---|---|
| Parameters | Units | Range |
| Feed Rate | Kilogram/hour (kg/hr) | 20-250 |
| Barrel Temperatures | Degrees Fahrenheit | 60-350 |
| Injection Speeds | Inches/Second (in/s) | 1-10 |
| Injection Pressures | Pounds per square inch (psi) | 5000-25000 |
| Injection Times | Seconds (s) | 3-40 |
| Stroke | Inches/second (in/s) | 0.5-8.0 |
| Screw Speed | Revolutions per minute (RPM) | 50-300 |
| Mould Temperatures | Degrees Fahrenheit | 140-350 |
| Cooling/Set Times | Seconds (s) | 10-175 |

It is also possible to simply admix the ingredients for the formulation and go directly to the injection molder so long as the parameters are controlled to achieve thermoplasticization of the formulation.

In another aspect of the present invention, any one of the formulations shown in Tables 1-4, are used to produce a pet chew or treat of the present invention. First, the liquid ingredients, not including the oil, are blended together and maintained below a desired temperature, preferably below 50°F (-10°C). The dry ingredients are also added to a mixer and blended together. The liquid ingredient mixture and the oil are then added to the dry ingredient blend in multiple stages to produce a mash. The multiple stages are used in order to prevent pooling and to distribute the liquid evenly. After all of the ingredients are added and evenly mixed together, the resultant mash is transferred to a surge tank for later conveyance to the injection molders or it is directly conveyed to the injection molders after the mixing process is complete. As described herein, when making a foamed chew or treat, a supercritical fluid is added or injected into the melt and the temperature and pressure parameters are controlled to maintain the supercritical state of the fluid until cell nucleation and expansion are desired whereupon the temperature and pressure parameters are modified or manipulated to produce a desired bubble size and bubble concentration for the final product. This manipulation can be done prior to or during the actual injection molding process.

Chews and treats of the present invention can be formed such that they are of any desired size and/or shape. In preferred forms, the volume ranges from 2.4 - 131 cubic cm (0.15 - 8 cubic inches), the width ranges from 8-25 mm, the height ranges from 14-40 mm and the length ranges from 52 - 153 mm.

Typical water activity will range between 0.45 - 0.65, more preferably between 0.48 - 0.62, and still more preferably between 0.52 - 0.59.

In the invention, the formulations described above are subjected to contact with a supercritical fluid as described below. Contacting such formulations with a supercritical fluid will impart many beneficial aspects to the products of the present invention. For example, treats and chews having the formulas described above but which are contacted with a supercritical fluid as described below will exhibit increased oral care properties due to the increased interaction with the surface structure as well as the fragmented inner surface of the foamed product. This increased oral care will be evident throughout the mouth including the teeth, gums, inside of the cheeks, and palate. The surface of the product will have a rougher or more varied texture than a similar treat composition that has not been subjected to or contacted with a supercritical fluid. This is due to the presence of the microbubbles that are formed by the supercritical fluid. Additionally, when the bubbles fracture, they provide an increased surface area with which the product fragments can contact and interact with the mouth and the parts therein. The concentration and distribution of bubbles will affect each of these properties such that as bubble concentration and distribution increase, the beneficial impact will also increase. Further, due to the improved structure and mechanics of the bite that result from biting and chewing a product as described herein, friction is also increased on the downward bite and upward pull.

Other advantages of the present invention include greater digestibility in comparison with treats or chews having a similar formulation, but which have not been contacted with a supercritical fluid. Due to the greater digestibility, stools will also be improved. Finally, the treats and chews will have fewer calories in comparison to similar sized and formulated treats and chews due to the microbubbles created by the supercritical fluid.

In general, the cells (or bubbles) will have an average diameter between 0.05 to 200 $\mu$m, more preferably between 0.1 to 150 $\mu$m, even more preferably between 1 to 100 $\mu$m, and still more preferably between 2 to 80 $\mu$m. Preferably, the cell distribution within the treat will be substantially uniform. Substantially uniform in this context will generally mean that cell density will not vary more than 10% over any section of the treat or chew that comprises at least 10% of the total volume of the treat or chew. More preferably, the cell density will not vary more than 7%, still more preferably not more than 5%, and still more preferably not more than 3% over any such section. Cell density will be between $2 \times 10^6$ to $2 \times 10^{16}$ cells/cc, more preferably between $2 \times 10^7$ to $2 \times 10^{15}$ cells/cc, still more preferably between $2 \times 10^8$ to $2 \times 10^{14}$ cells/cc, even more preferably between $2 \times 10^9$ to $2 \times 10^{13}$ cells/cc, and most preferably between $2 \times 10^{10}$ to $2 \times 10^{12}$ cells/cc. Such cell densities and cell sizes will result in treats having fewer calories and less mass per treat when compared to treats that have not undergone contact with a supercritical fluid as described herein. Preferably, the parameters of the process will be designed to result in a treat that has a reduction of at least 5% in both calories and mass when compared to conventional treats, more preferably, the reduction will be at least 10%, still more preferably at least 15%, even more preferably at least 20%, and still more preferably at least 25% or more.

The provision of extremely small cell sizes and high densities thereof in an aerated material, as achieved when using supercritical fluids to provide the aerating operation, as described with reference to the embodiments and aspects of the invention brings about substantially improved properties for the aerated materials obtained, particularly compared with previous standard cellular or microcellular aerated materials. For purposes of the present invention aerated and foamed are used interchangeably. Moreover, less treat-forming material is used in the process and, accordingly, this material is conserved and the costs thereof are reduced.

In accordance with one aspect of the invention, an aerated injection molded animal treat as defined by the claims is provided. In general, gases, such as nitrogen or carbon dioxide, in a non-critical state, are supplied to a high pressure chamber through a high pressure valve. The pressure within the high pressure chamber is either set to a point higher than the critical point of the gas utilized or the chamber is pressurized through a compressor to a point higher than the critical point. Similarly, the temperature within the high pressure chamber is either set to higher than the critical point for the gas being utilized or the chamber is heated to such a point. Once the pressure and the temperature have exceeded the respective critical points of the utilized gas, the gas is transformed into a supercritical liquid. Preferably, the temperature of the chamber is controllable by conventional means known in the art. For example, the high pressure chamber can be thermostatically controlled by selective heating and cooling so that the temperature within the high pressure chamber can be adjusted and maintained to maintain the utilized liquid/gas in a supercritical state. A polymeric treat, such as those made using recipes similar to those in Tables 1-4 is then placed in the high pressure chamber having the supercritical fluid therein. The treat is then left in the high pressure chamber for a period of time that is dependent on the thickness, density, and hardness of the treat as well as on the desired amount of cell nucleation and eventual foaming. Once the desired amount of time has passed, the high pressure chamber is opened and the treat is removed therefrom. Cell nucleation and expansion, or foaming, then occur within the treat as a result of the pressure and temperature rapidly assuming ambient room conditions after removal from the high pressure chamber. In general, the foaming time can range from 1 second to 15 minutes, more preferably between 30 seconds and 10 minutes, still more preferably between 45 seconds and 5 minutes, and most preferably between 1 minute and 3 minutes. It will be appreciated that the size and density or concentration of the cells within the treat can be adjusted by manipulating the residence time of the treat within the high pressure chamber as well as the hardness or permeability of the treat. Those of skill in the art will further understand that the desired amount of reduction in both calories and mass will be directly related to the amount of supercritical fluid used in the process, the hardness of the treat, the residence time in the high pressure chamber, and the temperature in the high pressure chamber.

When using carbon dioxide as the supercritical fluid, the processes of the present invention will need to be performed at a temperature above 31.1°C and at a pressure above 1071.3 psi. It will be appreciated that higher temperatures and pressures can be utilized depending on the desired treat or chew characteristics. The key is that the temperature and pressure must be above the critical point in order to maintain the fluid in a supercritical state. Critical temperatures and pressures are known in the art for each fluid.

When using nitrogen as the supercritical fluid, the processes of the present invention will need to be performed at a temperature above -147°C and at a pressure above 493 psi. It will be appreciated that higher temperatures and pressures can be utilized depending on the desired treat characteristics. The key is that the temperature and pressure must be above the critical point in order to maintain the fluid in a supercritical state. Critical temperatures and pressures are known in the art for each fluid.

In another aspect of the present disclosure, dog treats in accordance with the present invention are made using a continuous process. In such a process, an extruder is used to supply a quantity of extruded animal treat-forming material to a high pressure chamber wherein the material is contacted with a supercritical fluid. After exiting the extruder barrel, the material is supplied to a chamber having a supercritical fluid therein. The chamber includes a supercritical fluid therein and the environment within the chamber is maintained under conditions that will maintain the desired state of the supercritical fluid. The material is then advanced through the chamber at a rate that will produce the desired level of foaming of the material, as described above. In some embodiments, the product stream will be supplied to the chamber as a continuous sheet and the rate at which it progresses through the chamber will be controlled by a series of rollers. Preferably, the rollers will be held at a constant temperature. In some embodiments, the supercritical fluid is supplied to the chamber after being pressurized and heated to supercritical levels. As the extrudate travels through the series of rollers, the supercritical fluid and the extrudate form a fluid/extrudate system, sufficient fluid being supplied so that the extrudate is effectively saturated with fluid as it leaves the chamber. Once the extrudate exits the chamber, it is subjected to ambient temperatures and pressures, which causes a nucleation and expansion of cells within the fluid/extrudate material. The extrudate is then heated if further expansion of the cells is desired, thereby further foaming the extrudate material. Of course, the extrudate can be even further heated or treated after the foaming process. As described above, the process can be manipulated to control cell density and size in order to form products with the desired characteristics.

In another aspect of the disclosure, the supercritical fluid is supplied to an extrudate stream at a selected point such that the supercritical fluid is added into the material as it advances through the extrusion process to produce an extrudate that is saturated with supercritical fluid to a desired level. When the extrudate exits the barrel of the extruder, it is supplied to a die and then conveyed to a chamber where foaming takes place due to the subcritical conditions maintained therein. The pressure in the chamber is maintained at a level lower than that at the extruder barrel exit and as the pressure drops upon entering of the fluid/polymer material into chamber, cell nucleation and some expansion occurs within the material. If further expansion is desired, the material is heated. As with the other aspects described herein, the amount of nucleation and expansion can be controlled through a variety of parameters such that a product having the desired characteristics is produced.

In another aspect of the present disclosure, animal treat-forming material can be foamed using a stamp-molding process. In general, a stamp molding apparatus includes a mold form or cavity and a reciprocating mold body. In this aspect, the stamp molding apparatus is housed within a pressurizable chamber. Conditions within the chamber are maintained such that the supercritical state of the fluid is maintained. A supercritical fluid is supplied to the chamber together with an animal treat forming material, which is positioned between the mold cavity and the reciprocating mold body. Once the supercritical fluid and animal treat-forming material have been in contact for a time sufficient to appropriately saturate the material with the supercritical fluid, the reciprocating mold body presses the material into the mold cavity to make a molded product in the shape of the mold cavity. The pressure and temperature within the chamber can be adjusted/reduced to subcritical, preferably ambient conditions immediately prior to, simultaneously with, or just after the material is pressed into the cavity. The timing of the changing conditions will be selected on the basis of the desired effect on the foaming of the material. When the pressure and temperature conditions are reduced simultaneously with the forming of the molded product by pressing the material into the cavity, cell nucleation and cell expansion within the material occur simultaneously with the molding of the product. In such an embodiment, the product has a supermicrocellular structure and the product is both foamed and formed at room (ambient) temperature in one overall operation.

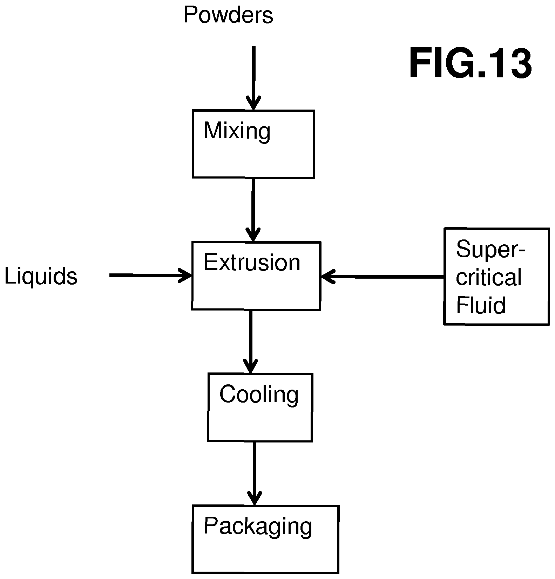

In a preferred variation of the process, shown in Fig. 13, the treat-forming material is contacted with a supercritical fluid during the extrusion process and within an extrusion barrel. This can be done by injecting supercritical fluid into an extruder during an extrusion process, wherein conditions within the extruder are designed to maintain the fluid in its supercritical state. In such an embodiment, the supercritical conditions cease upon exiting the extruder and cell nucleation and expansion take place rapidly. As noted above, nucleation and expansion can be controlled by manipulating both pressure and temperature conditions near the exit port of the extruder. For example, the extruder could be connected to a chamber that included both heat and pressure controls therein such that the individual heat and/or pressure changes could be slowly adjusted to achieve a desired cell nucleation and expansion characteristic. In another aspect, sub-supercritical gas could be injected into an extruder during an extrusion process wherein the temperature and pressure are brought to a point that surpasses the levels required to transform the gas into a supercritical fluid. The gas could be injected into the extruder either before or after the point at which the temperature and/or pressure was above the critical level. Again, the nucleation and/or expansion can be controlled as noted above. In another aspect, the extrudate with the supercritical fluid therein is injected into a mold. The mold can be designed to maintain the supercritical conditions (e.g. with air compression or physical mold compression) and upon expansion of the mold cavity and the pressure therein is reduced rapidly, cell growth occurs. In all of these embodiments, the mixing screw of the extruder aids in forming a solution of extrudate and supercritical fluid. Shear created by the rotation of the mixing screw stretches the supercritical fluid bubbles in the direction of the shear and broken by the rotation of the screw to create progressively smaller bubbles. Using irregular blades in the mixing screw can facilitate changes in the orientation of the gas/extrudate interface relative to the shear streamlines to thereby increase the efficiency of the laminar mixing occurring therein.

In some embodiments, the gas/extrudate mix is supplied to a static mixer which continually changes the orientation of the gas/extrudate interface relative to the shear streamlines and thereby also enhances the mixing process. As is known in the art, the diameter of the static mixer should be small so as to increase the flow rate and overcome the effect of surface tension of the gas bubbles. In general, larger numbers of mixing elements as well as small mixing elements are also preferred. As is known in the art, during the static mixing of the gas/extrudate, the gas molecules in the bubbles also tend to diffuse somewhat into the extrudate material which surrounds each bubble. However, diffusion can also occur in a separate diffusion chamber into which the two-phase gas/extrudate mixture is introduced. The mixture then becomes a complete single-phase solution in the diffusion chamber as the gas diffuses into the extrudate therein. The gas concentration in the single-phase gas/extrudate solution thereby produced is substantially uniform throughout the solution and the solution is effectively homogeneous. If the supercritical fluid does not diffuse into and saturate the extrudate uniformly and homogeneously, the foamed structure that is ultimately formed will not be uniform because the cell morphology strongly depends on the local gas concentration in the solution. In such an embodiment, the homogeneous and uniform fluid/extrudate solution in the diffusion chamber is then heated in a heating section thereof where the solution is rapidly heated (in a typical case the temperature may rise from about 190°C to about 245°C, in about 1 second, for example), so as to form nucleated cells in the saturated solution due to the thermodynamic instability which is created because of the decreased solubility of the fluid/extrudate solutions at the higher temperature. The greater the decrease in solubility which occurs, the higher the cell nucleation rate and the larger the number of cells nucleated. To prevent the nucleated cells from growing in the extrusion barrel, a high barrel pressure is maintained. The solution with nucleated cells is then injected into a mold cavity of a mold and cell growth during the mold filling process is prevented by using counter pressure to control the pressure in the mold cavity. As noted above, the counter pressure can be provided by the insertion of air under pressure from a source thereof via a shut-off valve. Finally, cell growth occurs inside the mold cavity when the mold cavity is expanded and the pressure therein is reduced rapidly, thereby producing a pressure instability which enhances cell growth.

Accordingly, expansion of the mold provides a molded and foamed article having the small cell sizes and high cell densities desired. By using a mixing screw for providing a shear field which produces a laminar flow of the mixed materials and then by using both a static mixer having small diameter mixing elements and a selected number of such mixing elements and a diffusion chamber, saturation of the extrudate material with supercritical fluid occurs. The time period required to provide such saturation can be reduced from that required in the embodiments of the invention discussed previously so that it is possible to achieve continuous operation at relatively high production rates that would not be possible when longer saturation times are needed.

In another aspect of the present disclosure, an injection molded animal treat is provided by a system that includes an extruder operatively connected to an injection molding chamber. Polymeric animal treat-forming material is supplied to the inlet of the extruder, advanced through the extruder to an enclosed passageway connected to the molding chamber, and through the passageway into the molding chamber. In preferred forms, the enclosed passageway receives a non-nucleated, homogeneous, fluid, single-phase solution of the polymeric material and a blowing agent, maintains that material to contain the fluid and the blowing agent in a fluid state at an elevated pressure within the passageway, and advances the solution as a fluid stream within the passageway in a downstream direction from the inlet end toward the molding chamber. Preferably, the enclosed passageway further includes a nucleating pathway in which blowing agent in the single-phase solution passing therethrough is nucleated. The nucleating pathway is constructed to include a polymer receiving end which receives a homogeneous fluid, single-phase solution of a polymeric material and a non-nucleated blowing agent, a nucleated polymer releasing end constructed and arranged to release nucleated polymeric material, and a fluid pathway connecting the receiving end to the releasing end. Optionally, the polymer releasing end can define an orifice of the molding chamber, or can be in fluid communication with the molding chamber. The nucleating pathway is constructed to have length and cross-sectional dimensions such that, the system is capable of subjecting fluid polymer admixed homogeneously with blowing agent to a pressure drop rate while passing through the pathway of at least about 0.1 GPa/sec, or at least about 0.3 GPa/sec, or at least about 1.0 GPa/sec, or at least about 3 GPa/sec, or at least about 10 GPa/sec, or at least about 100 GPa/sec. The nucleating pathway can also be constructed to have a variable cross-sectional dimension such that a fluid polymer flowing through the pathway is subjected to a variable pressure drop rate and/or temperature rise.

In another aspect of the disclosure, a system is provided having a molding chamber constructed and arranged to contain nucleated polymeric material at an elevated pressure in order to prevent cell growth at the elevated pressure. The pressurized molding chamber can be fluidly or mechanically pressurized in order to contain the nucleated polymeric material at such an elevated pressure. After reduction of the pressure on the pressurized molding chamber, the polymeric material can solidify the shape of a desired microcellular polymeric article as the molding chamber is constructed and arranged to have such an interior shape.

In another aspect of the disclosure, the system is provided having a barrel with an inlet designed to receive a precursor of extruded material, an outlet designed to release a fluid non-nucleated mixture of blowing agent and foamed polymeric article precursor to the precursor, an orifice connectable to a source of the blowing agent, and a screw mounted for reciprocation within the barrel. The extrusion system can also have at least two orifices connectable to a source of the blowing agent and the orifice can be arranged longitudinally along the axis of the barrel in order to sequentially introduce the non-nucleated mixture through at least the two orifices into the barrel as the screw reciprocates. The system can also include a second extrusion barrel connected in tandem with the first barrel where the second barrel has an inlet designed to receive the fluid non-nucleated mixture and has a screw mounted for reciprocation within the barrel.

In another aspect of the disclosure, a method for establishing a continuous stream of the non-nucleated, fluid, single-phase solution of polymeric precursor and blowing agent, nucleating the stream to create a nucleated stream of the mixture, passing the nucleated stream into the enclosure, and allowing the mixture to solidify in the shape of the enclosure is provided. Optionally, the stream can be continuously nucleated by continuously subjecting it to a pressure drop of a rate of at least about 0.1 GPa/sec while passing the stream into the enclosure, to create a continuous stream of nucleated material. Alternatively, the method involves intermittently nucleating the stream by subjecting it to a pressure drop at a rate of at least about 0.1 GPa/sec, while passing the stream into the enclosure so that non-nucleated material passes into the enclosure first, followed by the nucleated material. Conversely, the nucleated stream may be passed into the enclosure so that nucleated material passes into the enclosure, first followed by non-nucleated material. The method also involves removing a solidified microcellular article from the enclosure, and in a period of less than about 10 minutes providing a second nucleated mixture in the enclosure, allowing the second mixture to solidify in the shape of the enclosure, and removing a second solidified microcellular article from the enclosure.

In another aspect of the present disclosure, a method involving accumulating a charge of a precursor of foamed polymeric material and a blowing agent, heating a first portion of the charge defining at least about 2% of the charge to a temperature at least about 10°C. higher than the average temperature of the charge, and injecting the charge into a molding chamber is provided.

In another aspect of the present disclosure, a method for accumulating, in an accumulator fluidly connected to a molding chamber, a charge including a first portion comprising a fluid polymeric material essentially free of blowing agent and a second portion comprising a fluid polymeric material mixed with a blowing agent, and injecting the charge from the accumulator into a molding chamber is provided.

In another aspect of the present disclosure, a method involving injecting a fluid, single-phase solution of a precursor of foamed polymeric material and a blowing agent into a molding chamber from an accumulator in fluid communication with extrusion apparatus while nucleating the solution to create a nucleated mixture, and allowing the mixture to solidify as a polymeric microcellular article in the molding chamber is provided.

In another aspect of the present disclosure, a method involving injecting a blowing agent into an extruder barrel of polymer extrusion apparatus while an extrusion screw is moving axially within the barrel is provided.

In another aspect of the present disclosure, a method involving injecting a blowing agent from an extrusion screw into a barrel of polymer extrusion apparatus is provided.

In another aspect of the present disclosure, a method involving establishing in a barrel of extrusion apparatus a fluid polymeric article precursor, withdrawing a portion of the fluid precursor from the barrel, mixing the portion of the fluid precursor with blowing agent to form a mixture of the blowing agent and the portion of the fluid precursor, and introducing the mixture into the barrel is provided.

In another aspect of the present disclosure, a method involving introducing polymeric material admixed with supercritical fluid into a mold including a portion having an interior dimension of less than about 0.3 cm (0.125 inch) and allowing the polymeric material to solidify in the mold is provided.

In another aspect of the present disclosure, a method involving injecting a single phase solution of polymeric material and blowing agent into an open mold, then closing the mold and forming a microcellular article in the shape of the mold is provided.

In another aspect of the present disclosure, a method involving establishing a single-phase, non-nucleated solution of a polymeric material and blowing agent, introducing the solution into a molding chamber while nucleating the solution, cracking the mold thereby allowing cell growth to occur, and recovering a microcellular polymeric article having a shape similar to that of the molding chamber but being larger than the molding chamber is provided.

In another aspect of the present disclosure, a method involving forming in an extruder a non-nucleated, homogeneous, fluid, single-phase solution of a precursor of microcellular polymeric material and a blowing agent, filling a molding chamber with the solution while nucleating the solution to form within the molding chamber a nucleated microcellular polymeric material precursor is provided.

In another aspect of the present disclosure, a method involving injecting a polymeric/blowing agent mixture into a molding chamber at a melt temperature of less than about 204°C (400°F), and molding in the chamber a solid foam polymeric article having a void volume of at least about 5% and a length-to-thickness ratio of at least about 50:1 is provided. In certain embodiments of this method, the melt temperature is less than about 193°C (380°F)., in some embodiments less than about 149°C (300°F)., in other embodiments less than about 93°C (200°F) and in other embodiments less than about 38°C (100°F).

In another aspect of the present disclosure, a method that involves injecting non-foamed polymeric material into a molding chamber and allowing the polymeric material to form a microcellular polymeric article having a shape essentially identical to that of the molding chamber is provided. The article includes at least one portion having cross-sectional dimensions of at least about 1.3 cm (1/2 inch) in each in each of three perpendicular intersecting cross-sectional axes and a void volume of at least 50%.

In another aspect of the present disclosure, a method involving injecting a fluid precursor of foamed polymeric material into a molding chamber at a molding chamber temperature of less than about 100°C., and allowing the mixture to solidify in the molding chamber as a polymeric microcellular article is provided. The article includes at least one portion having cross-sectional dimensions of at least 1.3 cm (1/2 inch) in each of three perpendicular intersecting cross-sectional axes and a void volume of at least about 50%. The molding chamber temperature can be less than about 75°C., 50°C., or 30°C.

In another aspect of the present disclosure, a method involving injecting a fluid, single-phase solution of polymeric material and blowing agent into a molding chamber while subjecting the solution to a rapid pressure drop at a first pressure drop rate that is sufficient to cause microcellular nucleation is provided. Essentially immediately thereafter cell growth is allowed and controlled by subjecting the material to a second pressure drop that is less than the first pressure drop and at a decreasing rate.

In another aspect of the present disclosure, a system including an accumulator having an inlet for receiving a precursor of foamed polymeric material and a blowing agent, and an outlet, a molding chamber having an inlet in fluid communication with the outlet of the accumulator, and heating apparatus associated with the accumulator constructed and arranged to heat, during operation of the system, a first section of the accumulator proximate the molding chamber to a temperature at least about 10°C. higher than the average temperature of the accumulator is provided.

In another aspect of the present disclosure, a system for producing injection-molded microcellular material, including an extruder having an outlet at an outlet end thereof designed to release a non-nucleated, homogeneous, fluid, single-phase solution of a polymeric material and a blowing agent, and a molding chamber having an inlet in fluid communication with the outlet of the extruder is provided. The system is constructed and arranged to deliver from the extruder outlet to the molding chamber inlet the single-phase solution and, during filling of the molding chamber, to nucleate the single-phase solution to form within the chamber a nucleated microcellular polymeric material precursor.

In another aspect of the present disclosure, an extrusion system including a barrel having an inlet designed to receive a precursor of extruded material, an outlet designed to release a fluid mixture of non-nucleated blowing agent and the precursor, an orifice connectable to a source of blowing agent, and a screw mounted for reciprocation within the barrel is provided.

In another aspect of the present disclosure, a system for producing injection-molded microcellular material including an extruder having an outlet at an outlet end thereof designed to release a precursor of microcellular polymeric material and a blowing agent, and a molding chamber having an inlet in fluid communication with the outlet of the extruder is provided. The system is constructed and arranged to cyclically inject the precursor of microcellular polymeric material and the blowing agent into the molding chamber.

In another aspect of the present disclosure, an extrusion system including a barrel having an inlet designed to receive a precursor of extruded material, and outlet designed to release a fluid mixture of non-nucleated blowing agent and precursor, and an orifice connected to a source of blowing agent is provided. A screw is preferably mounted for reciprocation within the barrel.

In another aspect of the present disclosure, a system for producing molten polymeric microcellular material includes an inlet instructed and arranged to receive a precursor of molten polymeric microcellular material, a molding chamber, and a channel connecting the inlet with the molding chamber. The channel includes a divergent portion between the inlet and the molding chamber that increases in width by at least about 100% while maintaining a cross-sectional area changing by no more than about 25%.

In another aspect of the present disclosure, a system of the invention includes an inlet constructed and arranged to receive a precursor of molten polymeric microcellular material, a molding chamber, and a channel connecting the inlet with the molding chamber. The channel includes a nucleating pathway having length and cross-sectional dimensions that, when a fluid, single-phase solution of polymeric material and blowing agent is passed through the pathway at rates for which the system is constructed, creates a pressure drop in the fluid pathway at a pressure drop rate sufficient to cause microcellular nucleation. The channel includes a cell growth region between the nucleating pathway and the molding chamber that increases in cross-sectional dimension in the direction of the molding chamber.

In another aspect of the present disclosure, a system as described immediately above but, not necessarily including the cell growth region that increases in cross-sectional dimension, includes a nucleating pathway having a width to height ratio of at least about 1.5:1.

In another aspect of the present disclosure, a system similar to that described immediately above but, wherein the nucleating pathway need not necessarily have a width to height ration of at least 1.5:1, has a width equal to one dimension of the molding chamber.

In another aspect of the present disclosure a method that involves injecting a blowing agent into an extruder barrel of polymer extrusion apparatus while an extrusion screw is moving axially within the barrel is provided. In one preferred embodiment, the method involves injecting a blowing agent from an extrusion screw into a barrel of polymer extrusion apparatus. This injection technique can be used with any of a wide variety of microcellular and conventional techniques. In another embodiment, an extrusion screw is constructed and arranged for rotation within a barrel of polymer extrusion apparatus that includes, within the screw, a lumen communicating with an orifice in a surface of the screw. The lumen can be used to inject blowing agent into the extrusion barrel.

In another aspect of the present disclosure, a system for producing injection-molded articles is provided. The system generally includes an extruder, a molding chamber, a runner fluidly connecting the extruder and the molding chamber, and a temperature control device in thermal communication with the runner.

In another aspect of the present disclosure the invention involves establishing a fluid mixture blowing agent and injection-molded material precursor in an extruder, passing the mixture through a runner into a molding chamber, solidifying the portion of the fluid mixture in the chamber while maintaining a portion of the mixture in the runner in a fluid state, and injecting additional fluid mixture into the runner thereby urging the portion of the fluid mixture and the runner into the chamber.

In another aspect of the present disclosure a method that involves withdrawing a portion of a fluid polymeric article precursor from an extrusion barrel, mixing the portion of the fluid precursor with blowing agent to form a mixture, and re-introducing the mixture into the barrel is provided.

In another aspect of the present disclosure, a system including an extruder with an extruder barrel, a molding chamber, and a mixing chamber in fluid communication with a first, upstream orifice in the barrel, a second, downstream orifice in the barrel, and a source of a blowing agent is provided.

In another aspect of the present disclosure a molded foam article having a shape essentially identical to that of a molding chamber, including at least one portion having a cross-sectional dimension of no more than about 0.3 cm (0.125 inch) is provided.

In another aspect of the present disclosure a three-dimensional polymeric foam article having three intersecting, principal axes corresponding to the three dimensions, one of the dimensions associated with a first axis varying as a function of position along a second, perpendicular axis is provided. The article includes at least one portion having a cross-sectional dimension of no more than about 0.3 cm (0.125 inch) and has a void volume of at least about 20%.

Another aspect of the present disclosure involves a three-dimensional polymeric foam article having three intersecting, principal axes corresponding to the three dimensions, one of the dimensions associated with a first axis varying as a function of position along a second, perpendicular axis. The article includes at least one portion having a cross-sectional dimension of no more than about 0.3 cm (0.125 inch).

In another aspect of the present invention, an injection molded polymeric part having a length-to-thickness ratio of at least about 50:1, the polymer having a melt index of less than about 10 is provided.

In another aspect of the present disclosure, an injection molded polymeric part having a length-to-thickness ratio of at least about 120:1, the polymer having a melt flow rate of less than about 40 is provided.

In another aspect of the present disclosure, an injection molded polymeric foam having a void volume of at least about 5%, and having a surface that is free of splay and swirl visible to the naked human eye is provided.

In another aspect of the present disclosure, an article having a thickness of less than about 0.3 cm (0.125 inch) at a void volume of at least about 20% is provided. A method of making such an article is provided as well, that can involve introducing polymeric material admixed with a supercritical fluid into a mold including a portion having an interior dimension of less than about 0.125 inch, and allowing the polymeric material to solidify in the mold, the introducing and allowing steps taking place within a period of time of less than 10 seconds.

In another aspect of the present disclosure, a molded polymeric article having a shape essentially identical to that of a molding chamber and including at least one portion having a cross-sectional dimension of at least 1.3 cm (1/2 inch) in each of three perpendicular intersecting cross-sectional axes is provided. The article preferably has a void volume of at least about 50% and is defined by cells including cell walls of average cell wall thickness. The article is free of periodic solid boundaries of thickness greater than about five times the average cell wall thickness.

In another aspect of the present disclosure, a molded polymeric foam article including at least one portion having a cross-sectional dimension of no more than about 0.2 cm (0.075 inch) and a void volume of at least about 5% is provided.

In another aspect of the present disclosure, a molded polymeric foam article including at least one portion having a cross-sectional dimension of between about 0.2 cm (0.075 inch) and about 0.3 cm (0.125 inch) and a void volume of at least about 10% is provided.

In another aspect of the present disclosure, a molded polymeric foam article including at least one portion having a cross-sectional dimension of between about 0.3 cm (0.125 inch) and about 0.4 cm (0.150 inch) and a void volume of at least about 15% is provided.

In another aspect of the present disclosure, a molded polymeric foam article including at least one portion having a cross-sectional dimension of between about 0.4 cm (0.150 inch) and about 0.9 cm (0.350 inch) and a void volume of at least about 20% is provided.

In another aspect of the present disclosure, a molded polymeric article including a plurality of cells wherein at least 70% of the total number of cells have a cell size of less than 150 microns is provided.

In another aspect of the present disclosure, a system including a barrel having an inlet, at an upstream end, designed to receive a polymeric article precursor, and an outlet at a downstream end is provided. The barrel includes a blowing agent port, between the upstream end and the downstream end, fluidly connectable to a blowing agent source for introducing blowing agent from the source into the precursor in the barrel to form a mixture of precursor material and blowing agent in the barrel. The system also includes a metering device having an inlet connected to the blowing agent source and an outlet connected to the barrel. The metering device constructed and arranged to meter the mass flow rate of the blowing agent from the blowing agent source to the blowing agent port. The system further includes a molding chamber having an inlet in fluid communication with the outlet of the barrel to receive the mixture of precursor material and blowing agent from the barrel.

In another aspect of the present disclosure, a method of forming a polymeric foam article is provided. The method includes urging a stream of polymeric article precursor flowing in a downstream direction within a barrel of an extrusion apparatus. The method further includes introducing a blowing agent into the stream at a rate metered by the mass flow of the blowing agent to form a mixture of fluid polymeric article precursor and blowing agent. The method further includes injecting the mixture of fluid polymeric article precursor into a molding chamber fluidly connected to the barrel.

In another aspect of the present disclosure, a system including a barrel having an inlet, at an upstream end, designed to receive a polymeric article precursor, and an outlet, at a downstream end is provided. The barrel includes, between the upstream end and the downstream end, a blowing agent port having a plurality of orifices. The blowing agent port is fluidly connectable to a blowing agent source for introducing blowing agent from the source into the precursor in the barrel through respective orifices to form a mixture of precursor material and blowing agent in the barrel. The system further includes a molding chamber having an inlet in fluid communication with the outlet of the barrel to receive the mixture of precursor material and blowing agent from the barrel.

In another aspect of the present disclosure, a method for forming a polymeric article is provided. The method includes urging a stream of polymeric article precursor flowing in a downstream direction within a barrel of an extrusion apparatus. The method further includes introducing a blowing agent from a blowing agent source into the stream through a plurality of orifices in a blowing agent port fluidly connecting the barrel with the blowing agent source to form a mixture of precursor material and blowing agent, and injecting the mixture of precursor material into a molding chamber fluidly connected to the barrel.

In another aspect of the present disclosure, a system for producing injection-molded microcellular material is provided. The system preferably includes an accumulator constructed and arranged to accumulate a precursor of microcellular material and a blowing agent, and including an outlet. Preferably, the system further includes an injector constructed and arranged to cyclically inject the precursor of microcellular material through the outlet of the accumulator. Preferably, the system further includes a molding chamber having an inlet in fluid communication with the outlet of the accumulator. The molding chamber is preferably constructed and arranged to receive the precursor of microcellular material.

In another aspect of the present disclosure, a method includes accumulating a charge of a precursor of microcellular polymeric material and a blowing agent, and injecting the charge into a molding chamber.

In a preferred embodiment, the number of cells of the product of the present invention is at least 2 times as many cells as a pet chew that does not include a supercritical fluid therein, more preferably at least 3 times as many cells, more preferably at least 5 times as many cells, more preferably at least 10 times as many cells, more preferably at least 15 times as many cells, even more preferably at least 20 times as many cells, and most preferably at least 26 times as many cells as a pet chew that does not include a supercritical fluid therein.

The average cell volume is preferably from about 50,000 to 200,000 $\mu m^3$, with the most preferred average cell volume being about 107,000 $\mu m^3$. Preferably, the average cell volume is about 86% smaller than the cell volume in a pet chew that does not include a supercritical fluid therein. However, the average cell volume can be 80% smaller, 70% smaller, 60% smaller, 50% smaller, 40% smaller, 30% smaller, and 20% smaller than the cell volume of a pet chew that does not include a supercritical fluid therein.

In another embodiment of the present disclosure the product has a surface roughness greater than a pet chew that does not include a supercritical fluid therein. For purposes of the present disclosure surface roughness refers to the surface texture of the interior cross-section area, whereas this area makes surface contact with a tooth during the downward bite and upward pull involved with a chewing action. The surface roughness is preferably measured as an Ra ($\mu$m) value, whereas Ra is the arithmetic average of the absolute values of the profile height deviations from the mean line, recorded within the evaluation length. In other terms, Ra is the average of a set of individual measurements of a surfaces peaks and valleys.

However, the surface roughness can be measured using any known measurement, including but not limited to, Sq, the standard deviation of the height of distribution or in other terms, RMS surface roughness; Ssk, the skewness of the height distribution; Sku, the kurtois of the height distribution which qualifies flatness; Sp ($\mu$m), the height between the highest peak and the mean plane; Sv ($\mu$m), the depth between the mean plane and the deepest valley; Sz ($\mu$m), the height between the highest peak and the deepest valley; or Sa ($\mu$m), the arithmetical mean height or in other terms, the mean surface roughness. Preferably, the Ra value of the product of the present invention is from about 4 to 15, where values such as, but not limited to, 4.8, 5, 5.1, 5.5, 5.8, 5.9, 6, 6.3, 7, 7.6, 8, 9, 10, 11, and 11.8 are envisioned as the Ra value of the product of the present invention. Preferably the Ra value of the product of the present invention is greater than that of a pet chew that does not include a supercritical fluid therein. In a preferred embodiment, the Ra value of the product of the present invention is at least 1.5 to 4 times the Ra value of a pet chew that does not include a supercritical fluid therein., more preferably at least 2 to 3 times the Ra value of a pet chew that does not include a supercritical fluid therein.

In another aspect of the present disclosure the treat of the present invention preferably has an average coefficient of friction of about 0.136 $\pm$ 0.001 to 0.235 $\pm$ 0.049, where the average coefficient of friction may also be 0.198 $\pm$ 0.063, 0.138 $\pm$ 0.001, and values in-between. The formula of the pet chew of the present invention can be altered, as known by those skilled in the art, such that the coefficient of friction, elasticity, flexibility and hardness can be modified.

In a further aspect of the present disclosure the hardness of the treat of the present invention is preferably less than a pet chew that does not include a supercritical fluid therein. The hardness and/or stiffness can be expressed using Vickers, MPa, Young's Modulus (MPa) and Max. Depth (nm). Preferably, when the hardness of the treat is measured using the Vickers analysis, the hardness ranges from about 0.003 to 0.02, more preferably from about 0.005 to 0.1, where values such as, but not limited to, 0.0061$\pm$0.0005, 0.0074$\pm$0.0005, 0.0099$\pm$0.0021, and 0.109$\pm$0.0005 are envisioned. In an embodiment using the Young's Modulus [Mpa] stiffness value, the value for the pet chew of the present invention is preferably 20 or less, more preferably, from about 2 to 20, where values such as, but not limited to, 3, 3.8, 4, 5, 6, 7, 8, 8.1, 8.5, 9, 10, 11, 12, 13, 14, 15, 16, 17, 18, and 19 are also envisioned. Preferably, the Young's Modulus of the product of the present invention is about 20% to 90% less than the Young's Modulus [Mpa]of a pet chew that does not include a supercritical fluid therein., where values such as, but not limited to 30% less, 40%, less, 50% less, 60% less, 70% less, and 80% less are envisioned.

The tensile strength of the product of the present invention is preferably less than that of a pet chew that does not include a supercritical fluid therein. Preferably, the average tensile strength for the total area of the product of the present disclosure is preferably about 15% to 50%, of the tensile strength for a pet chew that does not include a supercritical fluid therein. In a most preferred embodiment, the average tensile strength for the total area of the product of the present disclosure is about 34% of the tensile strength for a pet chew that does not include a supercritical fluid therein. Allowing the treats to age, the average tensile strength of the total area of the product of the present disclosure is preferably from about 30% to 60% of the average tensile strength of a pet chew that does not include a supercritical fluid therein. In a most preferred embodiment, the average tensile strength for the total area of the aged product of the present invention is about 47% of the tensile strength for a pet chew that does not include a supercritical fluid therein. Preferably, the peak force of the product of the present disclosure is preferably from about 4-10, where a preferred value is about 5.5. The peak force value of the product of the present disclosure is preferably about half of the peak force value of a pet chew that does not include a supercritical fluid therein. Preferably, the distance to break for the product of the present disclosure is preferably from about 40-53, where a most preferred value is about 42. Preferably, distance to break is about 15-30% less than that of a pet chew that does not include a supercritical fluid therein, most preferably the distance to break is about 25% less than that of a pet chew that does not include a supercritical fluid therein. Preferably, the ratio of peak distance to peak force is higher for the product of the present invention when compared to a pet chew that does not include a supercritical fluid therein. Preferably, the ratio of peak distance to peak force is about 6:1 to 8:1, when compared to 4:1 of a pet chew that does not include a supercritical fluid therein. Thus, one embodiment of the present disclosure allows for easier tooth penetration than a pet chew that does not include a supercritical fluid therein.

In another aspect of the present disclosure an incorporation of meat, dry meat, or meat slurry is added into the polymeric treat through a controlled means.

In all of the aspects described, the control of temperature and pressure are important to the operation of the supercritical fluid. Such temperature and pressure control systems are well known in the extruder and compression molding arts. For example, heating and cooling elements, blankets, bands, rings, and the like can be utilized. Similarly, pressure conditions can be controlled in any conventional manner including by adjusting the screw speed of the extruder, adjusting barrel diameters, applying an external pressure source, and the like. In some forms, the temperature and pressure can be separately controlled apart from the extrusion or molding process. Alternatively, temperature and pressure conditions can be controlled as a part of the overall processes. Preferably, pressure and temperature monitors are positioned in the correct locations in order to ensure that supercritical fluid is maintained in the supercritical state when desired and released from the supercritical state in a controlled and deliberate manner.

The foregoing description and drawings merely explain and illustrate the invention and the disclosure is not limited thereto, as those skilled in the art who have the disclosure before them will be able to make modifications and variations therein without departing from the scope of the invention.

Example 6

Analysis of surface roughness

Materials and Methods:

The samples were prepared by removing the ends of the treats were using a standard paring knife, exposing the cross section area of the control and experimental treats. The length was between 2-3 centimeters.
Equipment: Nanovea ST400 Optical Profiler

Measurement Parameters:

Probe = 300 $\mu$m/MG7
Acquisition rate = 1000 Hz
Averaging = 1
Measure surface = 5 mm X 2 mm
Step size = 2.5 $\mu$m X 2.5 $\mu$m
Scanning Mode = Constant speed
Scan Time per line = 00:40:19

Probe specifications:

Z Resolution = 12 nm
Z Accuracy = 60
Lateral Resolution = 2.6$\mu$m

Measurement Method and Principle:

The axial chromatism technique utilized a white light source, where light passed through an objective lens with a high degree of chromatic aberration. The refractive index of the objective lens will vary in relation to the wavelength of the light. In effect, each separate wavelength of the incident white light will re-focus at a different distance from the lens (different height). When the measured sample is within the range of possible heights, a single monochromatic point will be focalized to form the image. Due to the confocal configuration of the system, only the focused wavelength will pass through the spatial filter with high efficiency, thus causing all other wavelengths to be out of focus. The spectral analysis was done using a diffraction grating. This technique deviates each wavelength at a different position, intercepting a line of CCD, which in turn indicates the position of the maximum intensity and allows direct correspondence to the Z height position.

Unlike the errors caused by probe contact or the manipulative Interferometry technique, White light Axial Chromatism technology measures height directly from the detection of the wavelength that hits the surface of the sample in focus. It is a direct measurement with no mathematical software manipulation. This type of measurement was used on a number of pieces of the treat of the present invention in order to determine the surface roughness of the treat.

Results and Conclusions:

| Height Parameters | Control | | 5% Shot Size Reduction with Nitrogen | | 10% Shot Size Reduction with Nitrogen | | 20% Shot Size Reduction with Nitrogen | | 10% Shot Size Reduction with Carbon Dioxide | |
|---|---|---|---|---|---|---|---|---|---|---|
| | Sample A | Sample B | Sample A | Sample B | Sample A | Sample B | Sample A | Sample B | Sample A | Sample B |
| $Sq$ ($\mu$m) | 7.518 | 6.32 | 15.99 | 23.32 | 17.97 | 23.69 | 12.37 | 17.28 | 16.96 | 22.51 |
| $Ssk$ | -0.07316 | 0.2692 | 0.8387 | 0.03318 | 0.4029 | 0.4484 | -1.713 | -0.8773 | -0.2469 | 0.1716 |
| $Sku$ | 3.742 | 4.288 | 4.372 | 2.629 | 2.876 | 3.267 | 8.704 | 6.357 | 3.95 | 3.61 |
| $Sp$ ($\mu$m) | 40.5 | 48.42 | 78.97 | 87.91 | 73.22 | 96.92 | 83.27 | 81.46 | 73.35 | 90.57 |
| $Sv$ ($\mu$m) | 51.26 | 43.36 | 66.23 | 86.3 | 69.84 | 106.5 | 89.06 | 148 | 96.69 | 98.8 |
| $Sz$ ($\mu$m) | 91.77 | 91.79 | 145.2 | 174.2 | 143.1 | 203.5 | 172.3 | 229.4 | 170 | 189.4 |
| $Sa$ ($\mu$m) | 5.766 | 4.845 | 12.39 | 18.7 | 14.4 | 19.03 | 8.572 | 13.13 | 13.15 | 17.29 |
| | | | | | | | | | | |
| Surface Roughness | | | | | | | | | | |
| $Ra$ ($\mu$m) | 3.508 | 4.28 | 6.346 | 5.131 | 11.81 | 5.084 | 4.846 | 5.894 | 7.603 | 5.506 |

EP 2 908 659 B1

Example 7

This examples illustrates how to coefficient of friction was determined.

Materials and methods

Sample Preparation: The ends of the treats were cut off using a standard paring knife, exposing the cross section area of the control and experimental treats. The length was between 2-3 centimeters.
Equipment: Nanovea TRB

Settings:

Load = 15 N

Duration of test = 20 min.

Speed rate = 100 rpm

Length = 5.5 mm

Revolutions = 2000

Ball Diameter = 6 mm

Ball Material = Steel

Substrate Material = Sample

Environmental Conditions:

Lubricant = N/A

Atmosphere = Air

Temperature = 24°C

Humidity = 40%

Measurement Method and Principle:

The instrument base was first leveled in the horizontal position by screwing or unscrewing the adjustable rubber pads at each corner. A ball-holder containing a 3 or 6 mm diameter ball was held in the load arm and placed at a height that allow the tribometer arm to be leveled horizontally when resting on the sample to ensure that normal load would be applied vertically. The arm was then balanced with counter weights to ensure that the arm and ball holder initially apply no force on the sample surface. Finally, weights corresponding to the load required for the test arm were finely placed on the arm over the ball holder. Through software, the test was then launched and the test was performed at a specified speed for a specified duration, and the frictional force is recorded over times.

Results and Conclusions:

|  | Max COF | Min COF | Average COF |
| --- | --- | --- | --- |
| Control | 0.171 ± 0.005 | 0.058 ± 0.011 | 0.120 ± 0.006 |
| 5% Shot Size Reduction with Nitrogen | 0.279 ± 0.073 | 0.092 ± 0.043 | 0.198 ± 0.063 |
| 10% Shot Size Reduction with Nitrogen | 0.320 ± 0.082 | 0.126 ± 0.031 | 0.235 ± 0.049 |

(continued)

|  | Max COF | Min COF | Average COF |
|---|---|---|---|
| 20% Shot Size Reduction with Nitrogen | 0.188 ± 0.010 | 0.031 ± 0.006 | 0.138 ± 0.001 |
| 10% Shot Size Reduction with Carbon Dioxide | 0.199 ± 0.005 | 0.055 ± 0.006 | 0.136 ± 0.001 |

Example 8

This example illustrates how the hardness was determined.

Materials and Methods

Sample Preparation: The ends of the treats were cut off using a standard paring knife, exposing the cross section area of the control and experimental treats. The length was between 2-3 centimeters. Equipment: Nanovea Nano Module

| Machine Parameters: | Control Sample* | Test Samples |
|---|---|---|
| Maximum force (mN)= | 10 | 1 |
| Loading rate (mN/min)= | 20 | 2 |
| Unloading rate (mN/min)= | 20 | 2 |
| Creep (s)= | 30 | 30 |
| Computation Method = | ASTEM E-2546 & Oliver & Pharr | |
| Indenter type= | I mm spherical 1 mm spherical | |

*Note: Because Control Sample was harder and smoother than the other samples, a higher maximum force was used.

Measurement Method and Principle:

The Nano Mechanical Tester is based on the standards for instrumented indentation, ASTM E2546 and ISO 14577. It uses an already established method where an indenter tip with a known geometry is driven into a specific site of the material to be tested, by applying an increasing normal load. When reaching a pre-set maximum value, the normal load is reduced until complete relaxation occurs. The load is applied by a piezo actuator and the load is measured in a controlled loop with a high sensitivity load cell. During the experiment the position of the indenter relative to the sample surface is precisely monitored with high precision capacitive sensor. The resulting load/displacement curves provide data specific to the mechanical nature of the material under examination. Established models are used to calculate quantitative hardness and modulus values for such data. This method was carried out on a number of treat portions to determine the hardness of the treats of the present invention.

Results and Conclusions:

| Sample | Hardness [Vickers] | Hardness [MPa] | Young's Modulus [MPa] | Max. Depth [nm] |
|---|---|---|---|---|
| Control | 0.0305 ± 0.0033 | 0.323 ± 0.035 | 23.9 ± 3.3 | 6228 ± 487 |
| Test 5% Shot Size Reduction with Nitrogen | 0.0109 ± 0.0005 | 0.115 ± 0.005 | 8.12 ± 0.61 | 2049 ± 73 |
| Test 10% Shot Size Reduction with Nitrogen | 0.0061 ± 0.0005 | 0.065 ± 0.005 | 3.84 ± 0.35 | 3538 ± 218 |
| Test 20% Shot Size Reduction with Nitrogen | 0.0074 ± 0.0005 | 0.078 ± 0.005 | 8.52 ± 1.50 | 2583 ± 96 |

(continued)

| Sample | Hardness [Vickers] | Hardness [MPa] | Young's Modulus [MPa] | Max. Depth [nm] |
|---|---|---|---|---|
| Test 10% shot Size Reduction with Carbon Dioxide | 0.0099 ± 0.0021 | 0.104 ± 0.022 | 17.0 ± 3.8 | 1895 ± 354 |

Example 9

This example illustrates how the tensile strength was determined.

Sample Preparation: Base material was injected molded into Tensile Bar shapes.

Measurement Method and Principle:

The testing method followed the standards outlined in ASTM D638, ISO 527.

The sample was placed in the grips of the testing machine, which pulled the sample apart at a rate of 1 mm s-1. The force required to pull the sample apart and the amount of sample stretch were measured. These values along with the sample cross-sectional area in the gauge region were used to calculate tensile properties. This process was repeated a number of times to determine the overall tensile strength of the treats of the present invention.

Results and Conclusions:

|  | Batch | Peak force (kg) | Distance at peak force (mm) | Area to peak force (mm$^2$) | Distance to break (mm) | Area peak to break (mm$^2$) | Travel Peak to Break (mm) | Total Area (mm$^2$0 |
|---|---|---|---|---|---|---|---|---|
| **Average Values** | Aerated Treat | 5.561 | 39.452 | 163.768 | 42.681 | 17.547 | 3.230 | 181.342 |
|  | Control Treat | 11.013 | 45.712 | 407.955 | 56.764 | 118.852 | 11.052 | 526.857 |
|  |  |  |  |  |  |  |  |  |
| **Standard Deviation** | Aerated Treat | 0.150 | 2.883 | 14.875 | 3.855 | 6.400 | 1.128 | 20.896 |
|  | Control Treat | 0.293 | 2.941 | 16.886 | 5.242 | 28.353 | 2.862 | 39.496 |

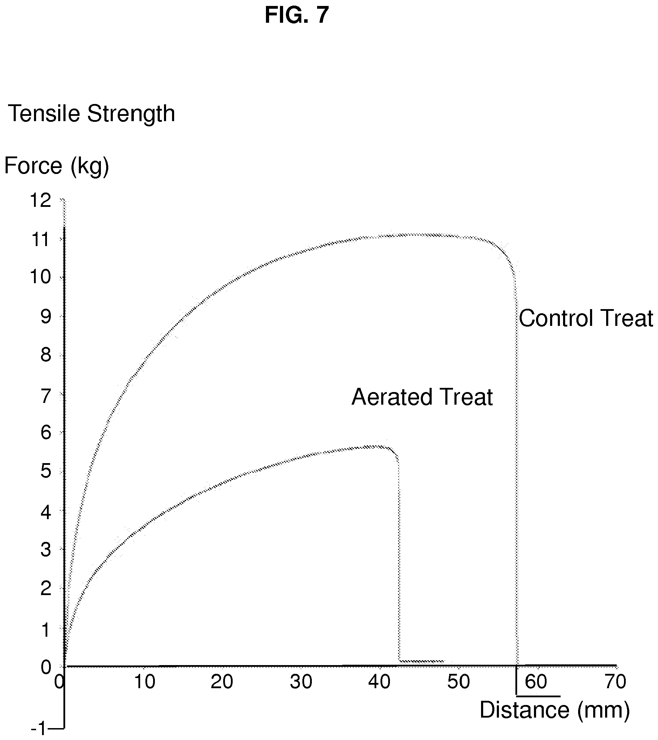

This data is illustrated in Figure7.

|  | Aerated Treat | Control Treat |
|---|---|---|
| Youngs Modulus (MPa/%) | 0.165 | 0.41 |
| Ultimate Strength (MPa) | 1.364 | 2.702 |
| Ductility (%) | 53.352 | 70.955 |
| Modulus of Toughness (MPa.%) | 55.597 | 161.573 |

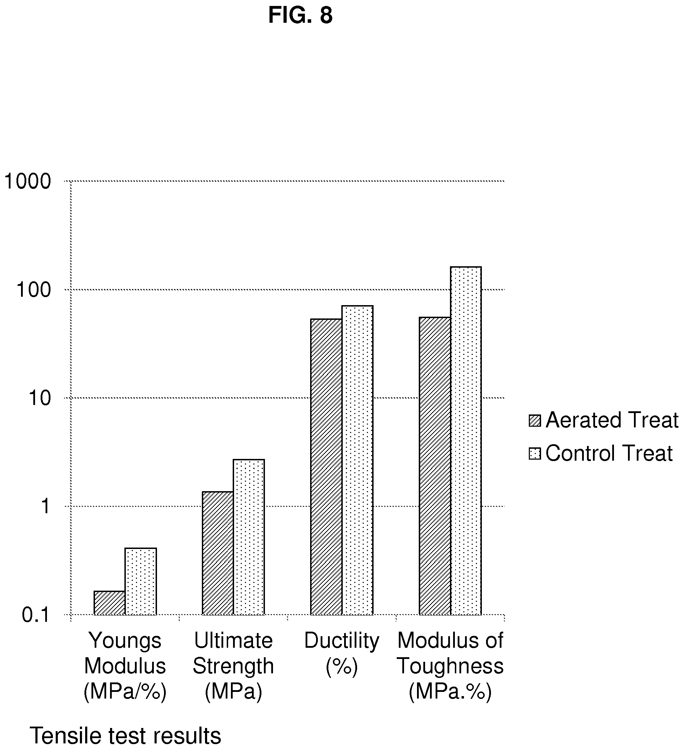

This data is illustrated in Figure 8.

Example 10

This example illustrates how the cell size and distribution were determined. Sample Preparation: The base material was injected molded into treat shape and analyzed.

| Equipment: | NSI Imagix microCT system |
|---|---|
| Parameter | Setting |
| Spot Size | Small |
| Voltage 50.0 | kV |
| Amperage 200 | $\mu$A |
| # of Projections | 2160 |
| Frame Averages | 1 |
| Frames/sec | 1 |
| Calibration Tool | Small (0.762 mm) |
| Beam Harden Correction | 0 |
| Mode | Step |

Measurement Method and Principle:

All samples were imaged at 18.2 micron voxel size. This means that only aeration above this 18.2 micron value will be observed and accurately segmented by the system. The samples were tested whole but only about a 2.5 to 3 cm section of the toothbrush handle for each sample was imaged.

X-ray tomography was used, which allows the viewing of internal structures that have different densities without cutting or altering the sample. The darker (more black) an area appears the lower the x-ray density of the material in that area. The whiter an area appears, the higher the x-ray density of the material in that area.

The aeration in the Dog Care samples appears black. The dog matrix appears grey under these conditions. The unknown bright white spots observed in all three samples are higher density or atomic number than the dog matrix material. Some typical higher density materials are bone meal, salt, calcium carbonate and sodium bicarbonate

The aeration was determined by exporting the y slices from the x-ray tomography into the Amira software. The slices were reconstructed into a three dimensional structure. The air bubbles were segmented and their percentage of the whole volume was determined.

Results and Conclusions:

|  | Aerated Treat | Control Treat |
|---|---|---|
| Air Cell Count per cubic centimeter | 368,976 | 14,106 |
| Average Cell Volume ($\mu$m$^3$) | 107,439.6 | 754,918.4 |
| Average Cell Diameter ($\mu$m) | 38.10 | 58.30 |
| Cell Diameter Standard Deviation | 12.73 | 28.58 |

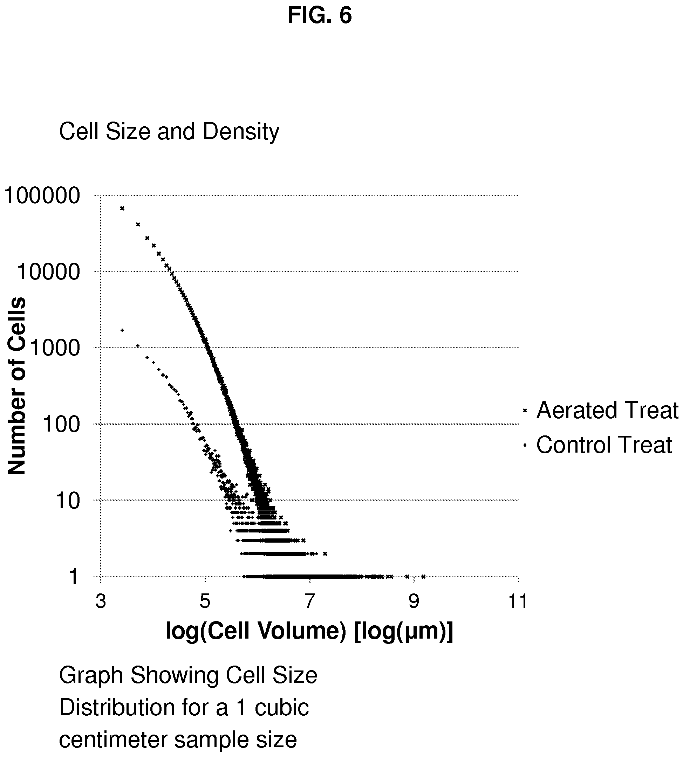

This data is illustrated in Figure 6.

Claims

1.   An aerated pet chew composition comprising:

15-90% by weight protein;
5-25% by weight glycerin;
5-25% by weight water; and

between $2 \times 10^6$ and $2 \times 10^{16}$ cells per cubic centimeter (cc), wherein the cells are created by the release of an amount of supercritical fluid sufficient to occupy 5-55% of the overall volume of the composition when the supercritical fluid is transformed to gas, and wherein the supercritical fluid is nitrogen or $CO_2$.

2. The composition of claim 1, wherein the protein comprises, 30-50% by weight fibrous protein and 15-25% gelling protein, wherein the gelling protein comprises gelatin.

3. The composition of claim 1, further comprising up to 40% by weight of a plasticizer.

4. The composition of claim 3, further comprising from 0.05 - 27.55% by weight of an additional ingredient selected from the group consisting of flavor enhancers, fat, vitamins, minerals, colorants, preservatives, and combinations thereof.

5. The composition of claim 1, wherein the cells have an average diameter between 0.05 to 200 $\mu$m.

6. The composition of claim 5, wherein the cell density is between $2 \times 10^8$ and $2 \times 10^{14}$ cells per cubic centimeter.

7. The composition of claim 5, wherein the cells are substantially uniform in distribution throughout the composition.

8. The composition of claim 5, wherein the cells are varied in distribution within the chew.

9. The composition of claim 1, wherein said aerated pet chew has a surface roughness having an Ra value from 4 to 15 $\mu$m.

10. The composition of claim 1, wherein the Young's Modulus, value of stiffness, of said aerated pet chew is 20 MPa or less.

11. The composition of claim 1, wherein the tensile strength of said aerated pet chew is 15% to 50% of the tensile strength of a pet chew that does not include a supercritical fluid therein.

12. The composition of claim 1, wherein the ratio of peak distance to peak force is higher than that of a pet chew that does not include a supercritical fluid therein.

13. The composition of claim 1, wherein the ratio of peak distance to peak force is from 6:1 to 8:1.

14. A method of making a pet chew composition in accordance with claim 1, wherein the composition is injection molded to produce the final pet chew product.

15. The method of claim 14, wherein the supercritical fluid contacts the composition during the injection molding process.

16. The method of claim 14, wherein said composition is extruded prior to the injection molding process.

17. The method of claim 16, wherein the supercritical fluid is added to the composition during the extrusion process.

18. A method of making a pet chew composition in accordance with claim 1, wherein the composition is extruded to produce the final pet chew product.

19. The method of claim 18, wherein the supercritical fluid contacts the composition during the extrusion process.

20. The composition of claim 2, wherein the gelatin has a bloom strength of between 100 and 400.

21. The composition of claim 1, wherein the protein comprises gelatin and wherein the supercritical fluid is nitrogen.

22. The composition of claim 1, wherein the supercritical fluid is nitrogen.

**Patentansprüche**

1. Zusammensetzung für lufthaltiges Haustier-Kauprodukt, umfassend:

15-90 Gew.-% Protein;
5-25 Gew.-% Glycerin;
5-25 Gew.-% Wasser und

zwischen $2 \times 10^6$ und $2 \times 10^{16}$ Zellen pro Kubikzentimeter ($cm^3$), wobei die Zellen durch die Freisetzung einer Menge von überkritischem Fluid, die zur Einnahme von 5-55 % des Gesamtvolumens der Zusammensetzung beim Übergang des überkritischen Fluids in ein Gas ausreicht, erzeugt werden und wobei es sich bei dem überkritischen Fluid um Stickstoff oder $CO_2$ handelt.

2. Zusammensetzung nach Anspruch 1, wobei das Protein 30-50 Gew.-% faserförmiges Protein und 15-25 % gelierendes Protein umfasst, wobei das gelierende Protein Gelatine umfasst.

3. Zusammensetzung nach Anspruch 1, ferner umfassend bis zu 40 Gew.-% eines Weichmachers.

4. Zusammensetzung nach Anspruch 3, ferner umfassend 0,05-27,55 Gew.-% eines zusätzlichen Inhaltsstoffs aus der Gruppe bestehend aus Geschmacksverbesserern, Fett, Vitaminen, Mineralien, Farbmitteln, Konservierungsstoffen und Kombinationen davon.

5. Zusammensetzung nach Anspruch 1, wobei die Zellen einen mittleren Durchmesser zwischen 0,05 bis 200 $\mu$m aufweisen.

6. Zusammensetzung nach Anspruch 5, wobei die Zellendichte zwischen $2 \times 10^8$ und $2 \times 10^{14}$ Zellen pro Kubikzentimeter liegt.

7. Zusammensetzung nach Anspruch 5, wobei die Zellen weitgehend einheitlich über die gesamte Zusammensetzung verteilt sind.

8. Zusammensetzung nach Anspruch 5, wobei die Zellen in dem Kauprodukt unterschiedlich verteilt sind.

9. Zusammensetzung nach Anspruch 1, wobei das lufthaltige Haustier-Kauprodukt eine Oberflächenrauigkeit mit einem Ra-Wert von 4 bis 15 $\mu$m aufweist.

10. Zusammensetzung nach Anspruch 1, wobei der Young-Modul, Steifigkeitswert, des lufthaltigen Haustier-Kauprodukts 20 MPa oder weniger beträgt.

11. Zusammensetzung nach Anspruch 1, wobei die Zugfestigkeit des lufthaltigen Haustier-Kauprodukts 15 % bis 50 % der Zugfestigkeit eines Haustier-Kauprodukts, das kein überkritisches Fluid enthält, beträgt.

12. Zusammensetzung nach Anspruch 1, wobei das Verhältnis von Peakabstand zu Peakkraft höher ist als dasjenige eines Haustier-Kauprodukts, das kein überkritisches Fluid enthält.

13. Zusammensetzung nach Anspruch 1, wobei das Verhältnis von Peakabstand zu Peakkraft 6:1 bis 8:1 beträgt.

14. Verfahren zur Herstellung einer Zusammensetzung für ein Haustier-Kauprodukt nach Anspruch 1, wobei die Zusammensetzung zur Herstellung des letztendlichen Haustier-Kauprodukts spritzgegossen wird.

15. Verfahren nach Anspruch 14, bei dem das überkritische Fluid während des Spritzgussprozesses mit der Zusammensetzung in Kontakt kommt.

16. Verfahren nach Anspruch 14, bei dem die Zusammensetzung vor dem Spritzgussprozess extrudiert wird.

17. Verfahren nach Anspruch 16, bei dem das überkritische Fluid während des Extrusionsprozesses zu der Zusammensetzung gegeben wird.

18. Verfahren zur Herstellung einer Zusammensetzung für ein Haustier-Kauprodukt nach Anspruch 1, wobei die Zusammensetzung zur Herstellung des letztendlichen Haustier-Kauprodukts extrudiert wird.

19. Verfahren nach Anspruch 18, bei dem das überkritische Fluid während des Extrusionsprozesses mit der Zusammensetzung in Kontakt kommt.

20. Zusammensetzung nach Anspruch 2, wobei die Gelatine eine Bloom-Stärke zwischen 100 und 400 aufweist.

21. Zusammensetzung nach Anspruch 1, wobei das Protein Gelatine umfasst und wobei es sich bei dem überkritischen Fluid um Stickstoff handelt.

22. Zusammensetzung nach Anspruch 1, wobei es sich bei dem überkritischen Fluid um Stickstoff handelt.

**Revendications**

1. Composition de produit aéré à mâcher pour animal domestique comprenant :

    15 à 90 % en poids de protéines ;
    5 à 25 % en poids de glycérine ;
    5 à 25 % en poids d'eau ; et

entre $2 \times 10^6$ et $2 \times 10^{16}$ cellules par centimètre cube ($cm^3$), les cellules étant créées par la libération d'une quantité de fluide supercritique suffisante pour occuper 5 à 55 % du volume global de la composition lorsque le fluide supercritique est transformé en gaz, et le fluide supercritique étant l'azote ou le $CO_2$.

2. Composition selon la revendication 1, les protéines comprenant, 30 à 50 % en poids de protéines fibreuses et 15 à 25 % en poids de protéines gélifiantes, les protéines gélifiantes comprenant de la gélatine.

3. Composition selon la revendication 1, comprenant en outre jusqu'à 40 % en poids d'un plastifiant.

4. Composition selon la revendication 3, comprenant en outre 0,05 à 27,55 % en poids d'un ingrédient supplémentaire choisi dans le groupe constitué par les exhausteurs de goût, les graisses, les vitamines, les minéraux, les colorants, les conservateurs et des combinaisons correspondantes.

5. Composition selon la revendication 1, les cellules possédant un diamètre moyen compris entre 0,05 et 200 $\mu$m.

6. Composition selon la revendication 5, la densité de cellules étant comprise entre $2 \times 10^8$ et $2 \times 10^{14}$ cellules par centimètre cube.

7. Composition selon la revendication 5, les cellules étant distribuées de manière sensiblement uniforme dans toute la composition.

8. Composition selon la revendication 5, les cellules possédant une distribution variée dans le produit à mâcher.

9. Composition selon la revendication 1, ledit produit aéré à mâcher pour animal domestique possédant une rugosité de surface possédant une valeur de Ra de 4 à 15 $\mu$m.

10. Composition selon la revendication 1, le module de Young, valeur de la rigidité, dudit produit aéré à mâcher pour animal domestique étant inférieur ou égal à 20 MPa.

11. Composition selon la revendication 1, la résistance à la traction dudit produit aéré à mâcher pour animal domestique étant de 15 % à 50 % de la résistance à la traction d'un produit à mâcher pour animal domestique qui ne comprend pas de fluide supercritique à l'intérieur.

12. Composition selon la revendication 1, le rapport de la distance de pic à la force de pic étant supérieur à celui d'un produit à mâcher pour animal domestique qui ne comprend pas de fluide supercritique à l'intérieur.

13. Composition selon la revendication 1, le rapport de la distance de pic à la force de pic étant de 6:1 à 8:1.

14. Procédé de fabrication d'une composition de produit à mâcher pour animal domestique selon la revendication 1, la composition étant moulée par injection pour produire le produit final à mâcher pour animal domestique.

**15.** Procédé selon la revendication 14, le fluide supercritique étant en contact avec la composition pendant le processus de moulage par injection.

**16.** Procédé selon la revendication 14, ladite composition étant extrudée avant le processus de moulage par injection.

**17.** Procédé selon la revendication 16, le fluide supercritique étant ajouté à la composition pendant le processus d'extrusion.

**18.** Procédé de fabrication d'une composition de produit à mâcher pour animal domestique selon la revendication 1, la composition étant extrudée pour produire le produit final à mâcher pour animal domestique.

**19.** Procédé selon la revendication 18, le fluide supercritique étant en contact avec la composition pendant le processus d'extrusion.

**20.** Composition selon la revendication 2, la gélatine possédant une force de Bloom comprise entre 100 et 400.

**21.** Composition selon la revendication 1, les protéines comprenant de la gélatine et le fluide supercritique étant l'azote.

**22.** Composition selon la revendication 1, le fluide supercritique étant l'azote.

Powders

Mixing

Liquids → Extrusion

Pellets

Cooling
De-clumping

Injection
Molding

**FIG. 1**

Cooling

Packaging ← Finished Product ← De-flashing → Flash

**FIG. 2**

# FIG. 3

Powders     Liquids

```
        |              |
        v              v
  +------------------------+
  |        Mixing          |
  +------------------------+
               |
               v
       +----------------+
       |   Injection    |
       |   Molding      |
       +----------------+
               |
               v
       +----------------+
       |    Cooling     |
       +----------------+
               |
               v
       +----------------+
       |  De-flashing   |----> Flash
       +----------------+
               | Finished
               v Product
       +----------------+
       |   Packaging    |
       +----------------+
```

FIG. 4

FIG. 5

# FIG. 6

Cell Size and Density

Graph Showing Cell Size
Distribution for a 1 cubic
centimeter sample size

# FIG. 7

Tensile Strength

# FIG. 8

Tensile test results

FIG. 9

FIG. 10

# FIG. 11

Powders     Liquids

Mixing

Super-critical Fluid → Injection Molding

Cooling

De-flashing → Flash

Finished Product

Packaging

FIG. 12

Supercritical Fluid

To Packaging

Defects

Deflasher → Flash

Regrind

Cooling → Defects

EP 2 908 659 B1

Powders

**FIG.13**

Mixing

Extrusion

Liquids →

Super-
critical
Fluid

Cooling

Packaging

**EP 2 908 659 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2011014328 A1

- US 2004166203 A1

**Non-patent literature cited in the description**

- 3D microstructure of supercritical fluid extrudates I: Melt rheology and microstructure formation. *Food Research International,* vol. 42 (5-6), 595-602